# EUROPEAN PATENT SPECIFICATION

(11) **EP 3 497 264 B1**
(45) Date of publication and mention of the grant of the patent: **07.10.2026**
(21) Application number: 17755032.4
(22) Date of filing: 14.08.2017
(51) Int. Cl.: C23C 22/83

(54) **SYSTEMS AND METHODS FOR TREATING A METAL SUBSTRATE**
SYSTEME UND VERFAHREN ZUR BEHANDLUNG EINES METALLSUBSTRATS
SYSTÈMES ET PROCÉDÉS DE TRAITEMENT D'UN SUBSTRAT MÉTALLIQUE

(30) Priority: 12.08.2016 US 201662374188 P; 08.12.2016 US 201662431454 P
(43) Date of publication of application: 19.06.2019
(73) Proprietor: PRC-Desoto International, Inc., Sylmar, California 91342 (US)
(72) Inventor: MORRIS, Eric L., Murrieta, California 92563 (US)
(74) Representative: f & e patent
(86) International application number: PCT/US2017/046787
(87) International publication number: WO 2018/032006

(56) References cited:
- WO-A1-2013/185131
- WO-A1-2014/151617
- US-A1- 2006 054 248
- US-A1- 2007 187 001

## Description

### FIELD

The present invention relates to compositions, systems and methods for treating a substrate. The present invention also relates to a substrate obtainable by treatment with the systems and methods.

### BACKGROUND

The oxidation and degradation of metals used in aerospace, commercial, and private industries are a serious and costly problem. To prevent the oxidation and degradation of the metals used in these applications, an inorganic protective coating can be applied to the metal surface. This inorganic protective coating, also referred to as a conversion coating, may be the only coating applied to the metal, or the coating can be an intermediate coating to which subsequent coatings are applied.

However, at least some of the coatings prepared using these compositions and methods can develop corrosion and/or pits on the surface. Further, at least some of the conversion compositions known in the art may also suffer from one or more of the following disadvantages: (1) a tendency of ingredients to precipitate in solution away from the metal surface in the form of a sludge-like material; (2) difficulty in obtaining a uniform coating which does not tend to over-coat and exhibit poor adhesion to the substrate; (3) the necessity to use multiple steps and extensive periods of time to deposit a coating; and (4) the necessity to use specific pretreatments and solution compositions in order to coat multiply alloys, especially aluminum 2024 alloys.

US 2006/054248 A1 relates to hexavalent-free chromate coatings used to protect zinc and alloys thereof from corrosion, for example zinc coated steel articles such as screws, clips, and other steel devices used in the automotive industry and other industries. WO 2013/185131 A1 relates to coating compositions comprising a corrosion-inhibiting metal cation and a conjugated compound. WO 2014/151617 A1 relates to a composition for application to a metal substrate comprising an aqueous carrier, a hydroxide anion and/or a phosphate anion, and a corrosion inhibitor comprising an azole compound, a rare earth ion, an alkali earth metal ion, and/or a transition metal ion. US 2007/187001 A1 relates to a method of treating metal surfaces to enhance corrosion resistance and paint bonding characteristics and relates to trivalent chromium coatings for aluminum and aluminum alloys used in such processes, which are substantially or entirely free of hexavalent chromium.

Therefore, there is a need for a conversion composition and/or treatment system that overcomes several of the deficiencies, disadvantages and undesired parameters of known conversion coatings.

### SUMMARY

Disclosed herein is a system for treating a metal substrate comprising: a cleaning composition, wherein the cleaning composition is alkaline, wherein the cleaning composition further comprises a corrosion inhibitor comprising a metal cation and/or an azole ; and a conversion composition comprising a trivalent chromium cation in an amount of 0.001 g/L to 20 g/L, and at least one coinhibitor comprising a Group IVB metal cation; and a sealing composition comprising a lithium cation in an amount of 5 ppm to 5500 ppm (as metal cation) based on total weight of the sealing composition, wherein the sealing composition has a pH of 9.5 to 12.5. to the claims.

Also disclosed herein is a method of treating a metal substrate as defined in the claims to the claims.

Also disclosed is a substrate obtainable by treatment with the system and/or obtainable by the method as defined in the claims to the claims.

### BRIEF DESCRIPTION OF THE DRAWINGS

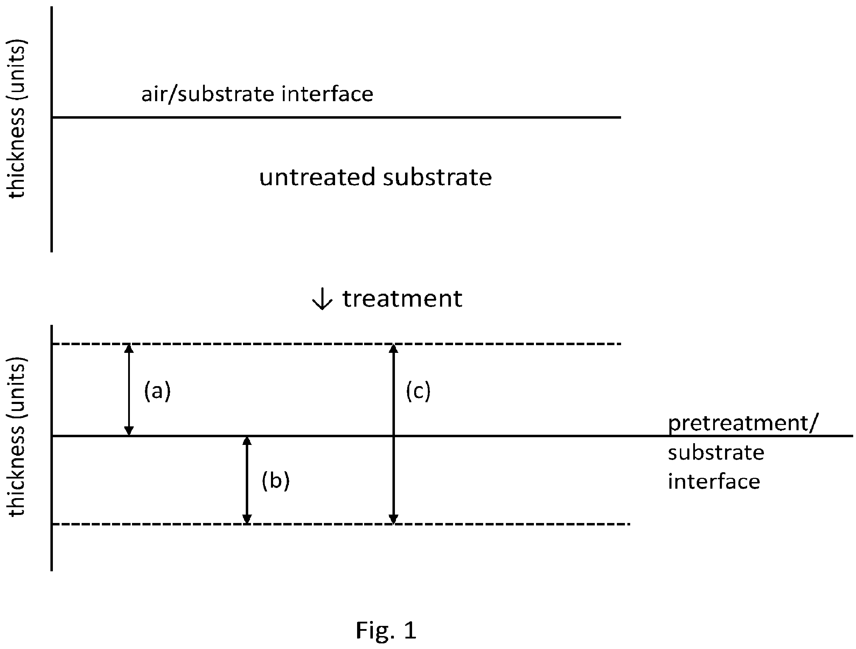

Fig. 1 shows a schematic illustrating thickness of a layer of the sealing composition on a substrate surface.

### DETAILED DESCRIPTION

The present invention is directed to a system for treating a metal substrate comprising: a cleaning composition, wherein the cleaning composition is alkaline, wherein the cleaning composition further comprises a corrosion inhibitor comprising a metal cation and/or an azole; and a conversion composition comprising an aqueous carrier and a trivalent chromium cation in an amount of 0.001 g/L to 20 g/L and at least one coinhibitor comprising a Group IVB metal; and a sealing composition comprising a lithium cation in an amount of 5 ppm to 5500 ppm (as metal cation) based on total weight of the sealing composition, wherein the sealing composition has a pH of 9.5 to 12.5. The present invention also is directed to a method of treating a metal substrate comprising: contacting at least a portion the substrate surface with a conversion composition comprising a trivalent chromium cation in an amount of 0.001 g/L to 20 g/L, and at least one coinhibitor comprising a Group IVB metal cationGroup IIA metal cation, a transition metal cation, a lanthanide series cation, an azole, or combinations thereof; and contacting at least a portion of the substrate surface with a sealing composition comprising a lithium cation in an amount of 5 ppm to 5500 ppm (as metal cation) based on total weight of the sealing composition, wherein the sealing composition has a pH of 9.5 to 12.5, further comprising contacting at least a portion of a surface of the substrate with a cleaning composition; wherein the contacting with the cleaning composition occurs prior to the contacting with the conversion composition, wherein the cleaning composition is alkaline, wherein the cleaning composition further comprises a corrosion inhibitor comprising a metal cation and/or an azole.

Suitable substrates that may be used in the present invention include metal substrates, metal alloy substrates, and/or substrates that have been metallized, such as nickel plated plastic. According to the present invention, the metal or metal alloy can comprise or be steel, aluminum, zinc, nickel, and/or magnesium. For example, the steel substrate could be cold rolled steel, hot rolled steel, electrogalvanized steel, and/or hot dipped galvanized steel. Aluminum alloys of the 1XXX, 2XXX, 3XXX, 4XXX, 5XXX, 6XXX, or 7XXX series as well as clad aluminum alloys also may be used as the substrate. Aluminum alloys may comprise 0.01% by weight copper to 10% by weight copper. Aluminum alloys which are treated may also include castings, such as 1XX.X, 2XX.X, 3XX.X, 4XX.X, 5XX.X, 6XX.X, 7XX.X, 8XX.X, or 9XX.X (e.g.: A356.0). Magnesium alloys of the AZ31B, AZ91C, AM60B, or EV31A series also may be used as the substrate. The substrate used in the present invention may also comprise titanium and/or titanium alloys, zinc and/or zinc alloys, and/or nickel and/or nickel alloys. According to the present invention, the substrate may comprise a portion of a vehicle such as a vehicular body (e.g., without limitation, door, body panel, trunk deck lid, roof panel, hood, roof and/or stringers, rivets, landing gear components, and/or skins used on an aircraft) and/or a vehicular frame. As used herein, "vehicle" or variations thereof includes, but is not limited to, civilian, commercial and military aircraft, and/or land vehicles such as cars, motorcycles, and/or trucks.

As mentioned above, the conversion composition of the present invention comprises a conversion composition comprising a trivalent chromium cation. The conversion composition may further comprise an anion that may be suitable for forming a salt with the trivalent chromium cation, including for example a sulfate, a nitrate, an acetate, a carbonate, a hydroxide, or combinations thereof.

According to the present invention, the trivalent chromium salt is present in the conversion composition in an amount of at least 0.001 g/L, such as at least 0.1 g/L, such as at least 0.5 g/L, and no more than 20 g/L, such as no more than 10 g/L, such as no more than 5 g/L. According to the present invention, the trivalent chromium salt is present in the conversion composition in an amount of 0.001 g/L to 20 g/L, such as 0.1 g/L to 10 g/L, such as 0.5 g/L to 5 g/L.

Optionally, according to the present invention, the conversion composition also may comprise a metal cation such as a Group I and/or a Group II metal cation salt. In such instances, the anion forming the salt with the Group I and/or Group II cation may comprise, for example, a halogen, a nitrate, a sulfate, an acetate, a phosphate, a silicate (orthosilicates and metasilicates), a carbonate, an hydroxide, and the like.

According to the present invention, the conversion composition also comprises at least one coinhibitor comprising a Group IVB metal. In examples, the coinhibitor may comprise a transition metal cation, a lanthanide series cation, an azole, or combinations thereof. According to the present invention, the lanthanide series cation may, for example, comprise cerium, praseodymium, terbium, or combinations thereof; the Group IIA metal cation may comprise magnesium; the transition metal cation may comprise a Group IIIB metal such as yttrium, scandium, or combinations thereof, a Group IVB metal cation such as comprise zirconium, titanium, hafnium, or combinations thereof, a Group VB metal cation such as vanadium, a Group VIB metal cation such as molybdenum, a Group VIIB metal cation such as manganese; and/or a Group XII metal cation such as zinc.

According to the present invention, the conversion composition may further comprise an anion that may be suitable for forming a salt with the conversion composition metal cations of the coinhibitor(s), such as a halogen, a nitrate, a sulfate, a phosphate, a silicate (orthosilicates and metasilicates), a carbonate, an acetate, a hydroxide, and the like.

According to the present invention, the salt of the coinhibitor of the conversion composition may be present in the conversion composition in an amount of at least 0.001 g/L, such as at least 0.1 g/L, such as at least 0.5 g/L, and in some instances, no more than 20 g/L, such as no more than 10 g/L, such as no more than 5 g/L. According to the present invention, the salt of the coinhibitor of the conversion composition may be present in the conversion composition in an amount of 0.001 g/L to 20 g/L, such as 0.1 g/L to 10 g/L, such as 0.5 g/L to 5 g/L.

According to the present invention, the conversion composition may exclude hexavalent chromium or compounds that include hexavalent chromium. Non-limiting examples of such materials include chromic acid, chromium trioxide, chromic acid anhydride, dichromate salts, such as ammonium dichromate, sodium dichromate, potassium dichromate, and calcium, barium, magnesium, zinc, cadmium, and strontium dichromate. When a conversion composition and/or a coating or a layer, respectively, formed from the same is substantially free, essentially free, or completely free of hexavalent chromium, this includes hexavalent chromium in any form, such as, but not limited to, the hexavalent chromium-containing compounds listed above.

Thus, optionally, according to the present invention, the conversion compositions and/or coatings or layers, respectively, deposited from the same may be substantially free, may be essentially free, and/or may be completely free of one or more of any of the elements or compounds listed in the preceding paragraph. A conversion composition and/or coating or layer, respectively, formed from the same that is substantially free of hexavalent chromium or derivatives thereof means that hexavalent chromium or derivatives thereof are not intentionally added, but may be present in trace amounts, such as because of impurities or unavoidable contamination from the environment. In other words, the amount of material is so small that it does not affect the properties of the conversion composition; in the case of hexavalent chromium, this may further include that the element or compounds thereof are not present in the conversion compositions and/or coatings or layers, respectively, formed from the same in such a level that it causes a burden on the environment. The term "substantially free" means that the conversion compositions and/or coating or layers, respectively, formed from the same contain less than 10 ppm of any or all of the elements or compounds listed in the preceding paragraph, based on total weight of the composition or the layer, respectively, if any at all. The term "essentially free" means that the conversion compositions and/or coatings or layers, respectively, formed from the same contain less than 1 ppm of any or all of the elements or compounds listed in the preceding paragraph, if any at all. The term "completely free" means that the conversion compositions and/or coatings or layers, respectively, formed from the same contain less than 1 ppb of any or all of the elements or compounds listed in the preceding paragraph, if any at all.

According to the present invention, the conversion composition may, in some instances, exclude phosphate ions or phosphate-containing compounds and/or the formation of sludge, such as aluminum phosphate, iron phosphate, and/or zinc phosphate, formed in the case of using a treating agent based on zinc phosphate. As used herein, "phosphate-containing compounds" include compounds containing the element phosphorous such as ortho phosphate, pyrophosphate, metaphosphate, tripolyphosphate, organophosphonates, and the like, and can include, but are not limited to, monovalent, divalent, or trivalent cations such as: sodium, potassium, calcium, zinc, nickel, manganese, aluminum and/or iron. When the conversion composition and/or a layer or coating comprising the same is substantially free, essentially free, or completely free of phosphate, this includes phosphate ions or compounds containing phosphate in any form.

Thus, according to the present invention, conversion composition and/or layers deposited from the same may be substantially free, or in some cases may be essentially free, or in some cases may be completely free, of one or more of any of the ions or compounds listed in the preceding paragraph. A conversion composition and/or layers deposited from the same that is substantially free of phosphate means that phosphate ions or compounds containing phosphate are not intentionally added, but may be present in trace amounts, such as because of impurities or unavoidable contamination from the environment. In other words, the amount of material is so small that it does not affect the properties of the composition; this may further include that phosphate is not present in the conversion compositions and/or layers deposited from the same in such a level that they cause a burden on the environment. The term "substantially free" means that the conversion compositions and/or layers deposited from the same contain less than 5 ppm of any or all of the phosphate anions or compounds listed in the preceding paragraph, based on total weight of the composition or the layer, respectively, if any at all. The term "essentially free" means that the conversion compositions and/or layers comprising the same contain less than 1 ppm of any or all of the phosphate anions or compounds listed in the preceding paragraph. The term "completely free" means that the conversion compositions and/or layers comprising the same contain less than 1 ppb of any or all of the phosphate anions or compounds listed in the preceding paragraph, if any at all.

According to the present invention, the pH of the conversion composition may, in some instances, be less than 7, such as less than 5, such as 1.5 to 6.9, such as 2.0 to 6.0, such as 2.5 to 4.5. In other instances, the pH of the conversion composition may be greater than 7, such as greater than 9, such as greater than 11, such as 7.1 to 13, such as 7.5 to 11, such as 8 to 10. Regardless of whether the conversion composition is acidic or basic, the pH may be adjusted using, for example, any acid and/or base as is necessary. Thus, according to the present invention, the pH of the conversion composition may be maintained through the inclusion of an acidic material, including water soluble and/or water dispersible acids, such as nitric acid, sulfuric acid, and/or phosphoric acid. Additionally, according to the present invention, the pH of the composition may be maintained through the inclusion of a basic material, including water soluble and/or water dispersible bases, such as sodium hydroxide, sodium carbonate, potassium carbonate, potassium hydroxide, ammonium hydroxide, ammonia, and/or amines such as triethylamine, methylethyl amine, or mixtures thereof.

The conversion composition may comprise an aqueous medium and may optionally contain other materials such as nonionic surfactants and auxiliaries conventionally used in the art of conversion compositions. In the aqueous medium, water dispersible organic solvents, for example, alcohols with up to about 8 carbon atoms such as methanol, isopropanol, and the like, may be present; or glycol ethers such as the monoalkyl ethers of ethylene glycol, diethylene glycol, or propylene glycol, and the like. When present, water dispersible organic solvents are typically used in amounts up to about ten percent by volume, based on the total volume of aqueous medium. Additionally, in the aqueous medium, thickeners such as cellulosic, silicated, or acrylic thickeners may be present. When present, such thickeners are typically used in amounts of at least 0.00001 % by weight, such as at least 0.5% by weight, and in some instances, no more than 5% by weight, such as no more than 1% by weight. When present such thickeners are typically used in amounts of 0.00001% to 5% by weight, such as 0.5% to 1% by weight.

Other optional materials include surfactants that function as defoamers or substrate wetting agents. Anionic, cationic, amphoteric, and/or nonionic surfactants may be used. Defoaming surfactants may optionally be present at levels up to 1 weight percent, such as up to 0.1 percent by weight, and wetting agents are typically present at levels up to 2 percent, such as up to 0.5 percent by weight, based on the total weight of the conversion composition.

As mentioned above, the conversion composition may comprise a carrier, often an aqueous medium, so that the composition is in the form of a solution or dispersion of the trivalent chromium cation and optionally other metal ions and/or coinhibitors in the carrier. According to the present invention, the solution or dispersion may be brought into contact with the substrate by any of a variety of known techniques, such as dipping or immersion, spraying, intermittent spraying, dipping followed by spraying, spraying followed by dipping, brushing, or roll-coating. According to the invention, the solution or dispersion, when applied to the metal substrate, is at a temperature ranging from 4.4 °C to 71.1 °C (40 °F to 160°F) , such as 16 °C to 43.3 °C (60 °F to 110 °F) , such as 21 °C to 32.2 °C (70 °F to 90 °F). For example, the conversion process may be carried out at ambient or room temperature. The contact time is often from 1 second to 30 minutes, such as 30 seconds to 15 minutes, such as 4 minutes to 10 minutes.

According to the present invention, following the contacting with the conversion composition, the substrate optionally may be air dried at room temperature or may be dried with hot air, for example, by using an air knife, by flashing off the water by brief exposure of the substrate to a high temperature, such as by drying the substrate in an oven at 15°C to 100°C, such as 20 °C to 90 °C, or in a heater assembly using, for example, infrared heat, such as for 10 minutes at 70°C, or by passing the substrate between squeegee rolls. According to the present invention, following the contacting with the conversion composition, the substrate optionally may be rinsed with tap water, deionized water, reverse osmosis (RO) water and/or an aqueous solution of rinsing agents in order to remove any residue and then optionally may be dried, for example air dried or dried with hot air as described in the preceding sentence.

According to the present invention, at least a portion of the substrate surface is cleaned and optionally deoxidized prior to contacting at least a portion of the substrate surface with the conversion composition described above, in order to remove grease, dirt, and/or other extraneous matter. At least a portion of the surface of the substrate may be cleaned by physical and/or chemical means, such as mechanically abrading the surface and/or cleaning/degreasing the surface with alkaline or acidic cleaning compositions. Such cleaners are often preceded or followed by a water rinse, such as with tap water, distilled water, RO water, or combinations thereof. As used herein, "cleaning compositions" included in the treatment systems and methods of the present invention may have deoxidizing functionality in addition to degreasing characteristics.

As mentioned above, according to the present invention, the cleaning composition is alkaline and may have a pH greater than 7, such as greater than 9, such as greater than 11. According the present invention, the pH of the cleaning composition may be 7 to 13, such as 9 to 12.7.

Commercially available alkaline cleaners, including Chemkleen^{™} 163, 177, 611L, 490MX, 2010LP, and 181ALP, Ultrax 32, Ultrax 97, and Ultrax 94D, each of which are commercially available from PPG Industries, Inc. (Cleveland, OH), and any of the DFM Series, RECC 1001, and 88X1002 cleaners commercially available from PRC-DeSoto International, Sylmar, CA), and Turco 4215-NCLT and Ridolene (commercially available from Henkel Technologies, Madison Heights, MI), and any of the SOCOCLEAN series of cleaners (commercially available from Socomore).

According to the present invention, the cleaning composition may comprise a hydroxide and/or a phosphate and/or a metasilicate. According to the present invention, the hydroxide ion, if present at all, may be present in the composition in an amount of 0.05 to 25 g/1000 g solution, for example 18 to 20 g/1000 g solution. In compositions having a phosphate, the phosphate may comprise phosphate (PO₄)³⁻, di-hydrogen phosphate (H₂PO₄)⁻, and/or pyrophosphate (P₂O₇)⁴⁻, for example, phosphate (PO₄)³⁻ and/or pyrophosphate (P₂O₇)⁴⁻. The phosphate may be present in the composition in an amount of 50 g/1000 g solution to 10 g/1000 g solution, for example 70 g/1000 g solution to 90 g/1000 g solution. Other nonlimiting examples of suitable phosphates include organo phosphates, such as Dequest^{®} obtainable from Monsanto (St. Louis, Mo.).

According to the present invention, the cleaning composition may comprise hydrogen and/or minerals such as iron, potassium, etc. For example, the cleaning composition may comprise phosphoric acid, acetic acid, nitric acid, sulfuric acid, hydrofluoric acid, hydrochloric acid, and/or iron sulfate.

The cleaning composition of the present invention also comprises a corrosion inhibitor comprising a metal cation and/or an azole compound. According to the present invention, the metal cation in the corrosion inhibitor (when included) may comprise various metal cations which have corrosion inhibiting characteristics. For example, the metal cation may comprise a lanthanide series element, a Group IA metal, a Group IIA metal, and/or a transition metal.

According to the present invention, the cleaning composition may comprise a corrosion inhibitor comprising a metal cation at a concentration of at least 0.01 g/L, such as at least 0.05 g/L, such as at least 0.1 g/L, such as at least 1 g/L, and in some instances may be present in the cleaning composition at a concentration of no more than 25 g/L, such as no more than 16 g/L, such as no more than 10 g/L, such as no more than 5 g/L. According to the present invention, the metal cation can be present in the cleaning composition at a concentration of 0.01 g/L of composition to 25 g/L of composition, such as 0.05 g/L to 16 g/L, such as 0.1 g/L to 10 g/L, such as 1 g/L to 5 g/L. In some instances, the upper limit of the amount of the metal ion may depend on the solubility of the salt used as a source for the metal ion. As discussed in further detail below, the metal cation may be provided in the composition in the form of a metal salt, in which case, the amounts listed here reflect the amount of the salt in the composition.

As noted above, the metal cation may be provided in the cleaning composition in the form of a salt (i.e., a metal salt may serve as the source for the metal cation in the composition) having an anion and the metal cation as the cation of the salt. The anion of the salt may be any suitable anion capable of forming a salt with the lanthanide series element, Group IA metal, Group IIA metal, and/or transition metal. Nonlimiting examples of such anions include a carbonate, a hydroxide, a nitrate, a halogen, a sulfate, a phosphate and/or a silicate (e.g., orthosilicates and metasilicates). However, the cleaning composition according to the present invention may comprise at least one hydroxide and/or phosphate. Optionally, according to the present invention, the cleaning composition may include at least two metal salts, and the at least two metal salts may comprise different anions and/or cations from each other. For example, the at least two metal salts may comprise different anions but the same cations, or may comprise different cations but the same anions.

As mentioned above, the cleaning composition of the present invention may comprise a halogen. The halogen may be provided in the composition the form of a salt with the metal cations described above. According to the present invention, the halogen may be present in the cleaning composition (and when the halogen is provided as a salt, the salt may be present in the composition) in an amount of at least 0.2 g/L of cleaning composition, and in some instances may be present in an amount of no more than 1.5 g/L of cleaning composition. According to the present invention, the halogen may be present in the cleaning composition in an amount of 0.2 g/L of cleaning composition to 1.5 g/L of cleaning composition.

Optionally, the cleaning composition of the present invention may further comprise a nitrogen-containing heterocyclic compound. The nitrogen-containing heterocyclic compound may include cyclic compounds having 1 nitrogen atom, such as pyrroles, and azole compounds having 2 or more nitrogen atoms, such as pyrazoles, imidazoles, triazoles, tetrazoles and pentazoles, 1 nitrogen atom and 1 oxygen atom, such as oxazoles and isoxazoles, or 1 nitrogen atom and 1 sulfur atom, such as thiazoles and isothiazoles. Nonlimiting examples of suitable azole compounds include 2,5-dimercapto-1,3,4-thiadiazole (CAS:1072-71-5), lH-benzotriazole (CAS: 95-14-7), lH-1,2,3-triazole (CAS: 288-36-8), 2-amino-5-mercapto-1,3,4-thiadiazole (CAS: 2349-67-9), also named 5-amino-1,3,4-thiadiazole-2-thiol, and 2-amino-1,3,4-thiadiazole (CAS: 4005-51-0). In some embodiments, for example, the azole compound comprises 2,5-dimercapto-1,3,4-thiadiazole. Additionally, according to the present invention, the nitrogen-containing heterocyclic compound may be in the form of a salt, such as a sodium salt.

According to the present invention, the nitrogen-containing heterocyclic compound may be present in the cleaning composition in an amount of at least 0.5 g/L of cleaning composition, such as at least 1 g/L of cleaning composition, such as at least 5 g/L of composition, and in some instances may be present in an amount of no more than 15 g/L of composition, such as no more than 12 g/L of composition, such as no more than 10 g/L of composition. According to the present invention, the nitrogen-containing heterocyclic compound may be present in the cleaning composition in an effective corrosion inhibiting amount, for example, 0.5 g/L of composition to 15 g/L of composition, such as 1 g/L of composition to 12 g/L of composition, such as 5 g/L of composition to 10 g/L of composition.

According to the present invention, the cleaning composition may contain other components and/or additives such as, but not limited to, carbonates, surfactants, chelators, thickeners, allantoin, polyvinylpyrrolidone, 2,5-dimercapto-1,3,4-thiadiazole, halides, adhesion promotors, such as adhesion promoting silanes (e.g., silanes having an amine and/or hydroxyl functionality; or a zirconium alkoxide and/or a silane coupling agent) and alcohols. For example, according to the present invention, a surfactant (if present at all) may be present in the cleaning composition in an amount of 0.015 g/1000 g solution to 60 g/1000 g solution. Surfactants suitable for use in the present invention include Dynol 604 and Carbowet^{™} DC01 Surfactant (both commercially available from Air Products, having offices in Allentown, Pa.), and Triton X-100 (available from The Dow Chemical Company, Midland Mich.).

Additionally, optionally, according to the present invention, the additive may comprise polyvinylpyrrolidone, which, if present at all, may be present in the cleaning composition in an amount of 0.01 g/L of cleaning composition to 5g/L of cleaning composition, for example 0.02 g/L of cleaning composition to about 1 g/L of cleaning composition.

According to the present invention, the cleaning composition of the present invention may comprise a carrier such as water such that the cleaning composition is in the form of a solution or dispersion. According to the present invention, the solution or dispersion may be brought into contact with the substrate by any of a variety of techniques, including but not limited to dip immersion, spraying, swabbing, or spreading using a brush, roller, or the like. With regard to application via spraying, conventional (automatic or manual) spray techniques and equipment used for air spraying may be used. According to the present invention, the cleaning composition may be applied using an electrolytic-coating system. The dwell time in which the cleaning composition remains in contact with the metal substrate may vary from a few seconds to multiple hours, for example less than 30 minutes or three minutes or less.

When the cleaning composition is applied to the metal substrate by immersion, the immersion times may vary from a few seconds to multiple hours, for example less than 30 minutes or three minutes or less, such as 2 seconds. When the cleaning composition is applied to the metal substrate using a spray application, the composition may be brought into contact with at least a portion of the substrate using conventional spray application methods. The dwell time in which the cleaning composition remains in contact with the metal substrate may vary from a few seconds to multiple hours, for example less than 30 minutes or three minutes or less, such as 2 seconds.

After contacting the metal substrate with the cleaning composition, the metal substrate may optionally be air dried, and then rinsed with tap water, RO water, and/or distilled/de-ionized water. Alternately, after contacting the metal substrate with the composition, the metal substrate may be rinsed with tap water, RO water, and/or distilled/de-ionized water, and then subsequently air dried (if desired). However, the substrate need not be dried, and in some instances, drying is omitted. Additionally, as noted above, the substrate need not be rinsed, and the metal substrate may then be further coated with conversion coatings, primers and/or top coats to achieve a substrate with a finished coating. Accordingly, in some instances this subsequent rinse may be omitted.

In some instances, according to the present invention, the cleaning composition may be applied to a metal substrate for 1 to 10 minutes (for example, 3 to 5 minutes), and the surface of the metal substrate may be kept wet by reapplying the composition. Then, the composition is optionally allowed to dry, for example in the absence of heat greater than room temperature, for 5 to 10 minutes (for example, 7 minutes) after the last application of the composition. However, the substrate does not need to be allowed to dry, and in some instances, drying is omitted. For example, according to the present invention, a solvent (e.g., alcohol) may be used to rinse the substrate, which allows the omission of a drying step.

After contacting the metal substrate with the cleaning composition, the metal substrate may optionally be air dried. However, the substrate need not be dried, and in some instances, drying may be omitted. A rinse is not required, but may be performed if desired.

According to the present invention, the metal substrate optionally may be conditioned prior to contacting the metal substrate with the cleaning composition described above. As used herein, the term "conditioning" refers to the surface modification of the substrate prior to subsequent processing. Such surface modification can include various operations, including, but not limited to cleaning (to remove impurities and/or dirt from the surface), deoxidizing, and/or application of a solution or coating, as is known in the art. Conditioning may have one or more benefits, such as the generation of a more uniform starting metal surface, improved adhesion to a subsequent coating on the pre-treated substrate, and/or modification of the starting surface in such a way as to facilitate the deposition of a subsequent composition.

According to the present invention, the metal substrate may be pre-treated by solvent wiping the metal prior to applying the composition to the metal substrate. Nonlimiting examples of suitable solvents include methyl ethyl ketone (MEK), methyl propyl ketone (MPK), acetone, and the like.

According to the present invention, the metal substrate optionally may be prepared by first solvent treating the metal substrate prior to contacting the metal substrate with the cleaning composition. As used herein, the term "solvent treating" refers to rinsing, wiping, spraying, or immersing the substrate in a solvent that assists in the removal of inks, oils, etc. that may be on the metal surface. Alternately, the metal substrate may be prepared by degreasing the metal substrate using conventional degreasing methods prior to contacting the metal substrate with the cleaning composition.

Additional optional procedures for preparing the metal substrate include the use of a surface brightener, such as an acid pickle or light acid etch, or a smut remover.

The metal substrate may be rinsed with either tap water, RO water, and/or distilled/de-ionized water between each of the pretreatment steps, and may be rinsed well with distilled/de-ionized water and/or alcohol after contact with the composition according to the present invention. However, as noted above, according to the present invention, some of the above described pre-treatment procedures and rinses may not be necessary prior to or after application of the cleaning composition.

As mentioned above, according to the present invention, optionally, at least a portion of the cleaned substrate surface may be deoxidized, mechanically and/or chemically. As used herein, the term "deoxidize" means removal of the oxide layer found on the surface of the substrate in order to promote uniform deposition of the pretreatment composition (described below), as well as to promote the adhesion of the pretreatment composition coating to the substrate surface. Suitable deoxidizers will be familiar to those skilled in the art. A typical mechanical deoxidizer may be uniform roughening of the substrate surface, such as by using a scouring or cleaning pad. Typical chemical deoxidizers include, for example, acid-based deoxidizers such as phosphoric acid, nitric acid, fluoroboric acid, sulfuric acid, chromic acid, hydrofluoric acid, and ammonium bifluoride, or Amchem 7/17 deoxidizers (available from Henkel Technologies, Madison Heights, MI), OAKITE DEOXIDIZER LNC (commercially available from Chemetall), TURCO DEOXIDIZER 6 (commercially available from Henkel), or combinations thereof. Often, the chemical deoxidizer comprises a carrier, often an aqueous medium, so that the deoxidizer may be in the form of a solution or dispersion in the carrier, in which case the solution or dispersion may be brought into contact with the substrate by any of a variety of known techniques, such as dipping or immersion, spraying, intermittent spraying, dipping followed by spraying, spraying followed by dipping, brushing, or roll-coating. According to the present invention, the skilled artisan will select a temperature range of the solution or dispersion, when applied to the metal substrate, based on etch rates, for example, at a temperature ranging from 10°C to 66°C (50°F to 150°F), such as from 21°C to 54°C (70°F to 130°F), such as from 27°C to 49°C (80°F to 120°F). The contact time may be from 30 seconds to 20 minutes, such as 1 minute to 15 minutes, such as 90 seconds to 12 minutes, such as 3 minutes to 9 minutes.

The sealing composition comprises a lithium cation. The lithium cation may be in the form of a lithium salt. In addition, the sealing composition also may further comprise at least one Group IA metal cation other than lithium, a Group VB metal cation, and/or Group VIB metal cation. The at least one Group IA metal cation other than lithium, a Group VB metal cation, and/or Group VIB metal cation may be in the form of a salt. Nonlimiting examples of anions suitable for forming a salt with the lithium, Group IA cations other than lithium, Group VB cations, and/or Group VIB cations include carbonates, hydroxides, nitrates, halogens, sulfates, phosphates and silicates (e.g., orthosilicates and metasilicates) such that the metal salt may comprise a carbonate, an hydroxide, a nitrate, a halide, a sulfate, a phosphate, a silicate (e.g., orthosilicate or metasilicate), a permanganate, a chromate, a vanadate, a molybdate, and/or a perchlorate.

According to the present invention, the metal salts of the sealing composition (i.e., the salts of lithium, Group IA metals other than lithium, Group VB, and/or Group VIB) each may be present in the sealing composition in an amount of at least 25 ppm, such as at least 150 ppm, such as at least 500 ppm (calculated as total compound) based on total weight of the sealing composition, and in some instances, no more than 30000 ppm, such as no more than 2000 ppm, such as no more than 1500 ppm (calculated as total compound) based on total weight of the sealing composition. According to the present invention, the metal salts of the sealing composition (i.e., the salts of lithium, Group IA metals other than lithium, Group VB, and/or Group VIB) each may be present in the sealing composition in an amount of 25 ppm to 30000 ppm, such as 150 ppm to 2000 ppm, such as 500 ppm to 1500 (calculated as total compound) based on total weight of the sealing composition.

According to the present invention, the lithium cation, the Group IA cation other than lithium, the Group VB metal cation, and the Group VIB metal cation each may be present in the sealing composition in an amount of at least 5 ppm, such as at least 50 ppm, such as at least 150 ppm, such as at least 250 ppm (calculated as cation) based on total weight of the sealing composition, and in some instances, may be present in an amount of no more than 5500 ppm, such as no more than 1200 ppm, such as no more than 1000 ppm, such as no more than 500 ppm, (calculated as cation) based on total weight of the sealing composition. In some instances, according to the present invention, the lithium cation, the Group IA cation other than lithium, the Group VB metal cation, and the Group VIB metal cation each may be present in the sealing composition in an amount of 5 ppm to 5500 ppm, such as 50 ppm to 1000 ppm, (calculated as cation) based on total weight of the sealing composition , such as 150 ppm to 500 ppm.

According to the present invention, the lithium salt of the present invention may comprise an inorganic lithium salt, an organic lithium salt, or combinations thereof. According to the present invention, the anion and the cation of the lithium salt both may be soluble in water. According to the present invention, for example, the lithium salt may have a solubility constant in water at a temperature of 25° C. (K; 25° C) of at least 1x10⁻¹¹, such as least 1x10⁻⁴, and in some instances, may be no more than 5x10⁺². According to the present invention, the lithium salt may have a solubility constant in water at a temperature of 25° C. (K ;25° C.) of 1x10⁻¹¹ to 5x10⁺², such as 1x10⁻⁴ to 5x10⁺². As used herein, "solubility constant" means the product of the equilibrium concentrations of the ions in a saturated aqueous solution of the respective lithium salt. Each concentration is raised to the power of the respective coefficient of ion in the balanced equation. The solubility constants for various salts can be found in the *Handbook of Chemistry and* Physics.

According to the present invention, the sealing composition of the present invention may an include oxidizing agent, such as hydrogen peroxide, persulfates, perchlorates, sparged oxygen, bromates, peroxi-benzoates, ozone, and the like, or combinations thereof. For example, the sealing composition may comprise 0.1 wt % to 15 wt % of an oxidizing agent based on total weight of the sealing composition, such as 2 wt% to 10 wt %, such as 6 wt% to 8 wt%. Alternatively, according to the present invention, the sealing composition may be substantially free, or in some cases, essentially free, or in some cases, completely free, of an oxidizing agent.

According to the present invention, the sealing composition may exclude Group IIA metal cations or Group IIA metal-containing compounds, including but not limited to calcium. Non-limiting examples of such materials include Group IIA metal hydroxides, Group IIA metal nitrates, Group IIA metal halides, Group IIA metal sulfamates, Group IIA metal sulfates, Group IIA carbonates and/or Group IIA metal carboxylates. When a sealing composition and/or a coating or a layer, respectively, formed from the same is substantially free, essentially free, or completely free of a Group IIA metal cation, this includes Group IIA metal cations in any form, such as, but not limited to, the Group IIA metal-containing compounds listed above.

According to the present invention, the sealing composition may exclude chromium or chromium-containing compounds. As used herein, the term "chromium-containing compound" refers to materials that include hexavalent chromium. Non-limiting examples of such materials include chromic acid, chromium trioxide, chromic acid anhydride, dichromate salts, such as ammonium dichromate, sodium dichromate, potassium dichromate, and calcium, barium, magnesium, zinc, cadmium, and strontium dichromate. When a sealing composition and/or a coating or a layer, respectively, formed from the same is substantially free, essentially free, or completely free of chromium, this includes chromium in any form, such as, but not limited to, the hexavalent chromium-containing compounds listed above.

Thus, optionally, according to the present invention, the present sealing compositions and/or coatings or layers, respectively, deposited from the same may be substantially free, may be essentially free, and/or may be completely free of one or more of any of the elements or compounds listed in the preceding paragraph. A sealing composition and/or coating or layer, respectively, formed from the same that is substantially free of chromium or derivatives thereof means that chromium or derivatives thereof are not intentionally added, but may be present in trace amounts, such as because of impurities or unavoidable contamination from the environment. In other words, the amount of material is so small that it does not affect the properties of the sealing composition; in the case of chromium, this may further include that the element or compounds thereof are not present in the sealing compositions and/or coatings or layers, respectively, formed from the same in such a level that it causes a burden on the environment. The term "substantially free" means that the sealing compositions and/or coating or layers, respectively, formed from the same contain less than 10 ppm of any or all of the elements or compounds listed in the preceding paragraph, based on total weight of the composition or the layer, respectively, if any at all. The term "essentially free" means that the sealing compositions and/or coatings or layers, respectively, formed from the same contain less than 1 ppm of any or all of the elements or compounds listed in the preceding paragraph, if any at all. The term "completely free" means that the sealing compositions and/or coatings or layers, respectively, formed from the same contain less than 1 ppb of any or all of the elements or compounds listed in the preceding paragraph, if any at all.

According to the present invention, the sealing composition may, in some instances, exclude phosphate ions or phosphate-containing compounds and/or the formation of sludge, such as aluminum phosphate, iron phosphate, and/or zinc phosphate, formed in the case of using a treating agent based on zinc phosphate. As used herein, "phosphate-containing compounds" include compounds containing the element phosphorous such as ortho phosphate, pyrophosphate, metaphosphate, tripolyphosphate, organophosphonates, and the like, and can include, but are not limited to, monovalent, divalent, or trivalent cations such as: sodium, potassium, calcium, zinc, nickel, manganese, aluminum and/or iron. When a composition and/or a layer or coating comprising the same is substantially free, essentially free, or completely free of phosphate, this includes phosphate ions or compounds containing phosphate in any form.

Thus, according to the present invention, sealing composition and/or layers deposited from the same may be substantially free, or in some cases may be essentially free, or in some cases may be completely free, of one or more of any of the ions or compounds listed in the preceding paragraph. A sealing composition and/or layers deposited from the same that is substantially free of phosphate means that phosphate ions or compounds containing phosphate are not intentionally added, but may be present in trace amounts, such as because of impurities or unavoidable contamination from the environment. In other words, the amount of material is so small that it does not affect the properties of the composition; this may further include that phosphate is not present in the sealing compositions and/or layers deposited from the same in such a level that they cause a burden on the environment. The term "substantially free" means that the sealing compositions and/or layers deposited from the same contain less than 5 ppm of any or all of the phosphate anions or compounds listed in the preceding paragraph, based on total weight of the composition or the layer, respectively, if any at all. The term "essentially free" means that the sealing compositions and/or layers comprising the same contain less than 1 ppm of any or all of the phosphate anions or compounds listed in the preceding paragraph. The term "completely free" means that the sealing compositions and/or layers comprising the same contain less than 1 ppb of any or all of the phosphate anions or compounds listed in the preceding paragraph, if any at all.

According to the present invention, the sealing composition may, in some instances, exclude fluoride or fluoride sources. As used herein, "fluoride sources" include monofluorides, bifluorides, fluoride complexes, and mixtures thereof known to generate fluoride ions. When a composition and/or a layer or coating comprising the same is substantially free, essentially free, or completely free of fluoride, this includes fluoride ions or fluoride sources in any form, but does not include unintentional fluoride that may be present in a bath as a result of, for example, carry-over from prior treatment baths in the processing line, municipal water sources (e.g.: fluoride added to water supplies to prevent tooth decay), fluoride from a pretreated substrate, or the like. That is, a bath that is substantially free, essentially free, or completely free of fluoride, may have unintentional fluoride that may be derived from these external sources, even though the composition used to make the bath prior to use on the processing line was substantially free, essentially free, or completely free of fluoride.

For example, the sealing composition may be substantially free of any fluoride-sources, such as ammonium and alkali metal fluorides, acid fluorides, fluoroboric, fluorosilicic, fluorotitanic, and fluorozirconic acids and their ammonium and alkali metal salts, and other inorganic fluorides, nonexclusive examples of which are: zinc fluoride, zinc aluminum fluoride, titanium fluoride, zirconium fluoride, nickel fluoride, ammonium fluoride, sodium fluoride, potassium fluoride, and hydrofluoric acid, as well as other similar materials known to those skilled in the art.

Fluoride present in the sealing composition that is not bound to metals ions such as Group IVB metal ions, or hydrogen ion, defined herein as "free fluoride," may be measured as an operational parameter in the sealing composition bath using, for example, an Orion Dual Star Dual Channel Benchtop Meter equipped with a fluoride ion selective electrode ("ISE") available from Thermoscientific, the symphony^{®} Fluoride Ion Selective Combination Electrode supplied by VWR International, or similar electrodes. See, e.g., Light and Cappuccino, Determination of fluoride in toothpaste using an ion-selective electrode, J. Chem. Educ., 52:4, 247-250, April 1975. The fluoride ISE may be standardized by immersing the electrode into solutions of known fluoride concentration and recording the reading in millivolts, and then plotting these millivolt readings in a logarithmic graph. The millivolt reading of an unknown sample can then be compared to this calibration graph and the concentration of fluoride determined. Alternatively, the fluoride ISE can be used with a meter that will perform the calibration calculations internally and thus, after calibration, the concentration of the unknown sample can be read directly.

Fluoride ion is a small negative ion with a high charge density, so in aqueous solution it is frequently complexed with metal ions having a high positive charge density, such as Group IVB metal ions, or with hydrogen ion. Fluoride anions in solution that are ionically or covalently bound to metal cations or hydrogen ion are defined herein as "bound fluoride." The fluoride ions thus complexed are not measurable with the fluoride ISE unless the solution they are present in is mixed with an ionic strength adjustment buffer (e.g.: citrate anion or EDTA) that releases the fluoride ions from such complexes. At that point (all of) the fluoride ions are measurable by the fluoride ISE, and the measurement is known as "total fluoride". Alternatively, the total fluoride can be calculated by comparing the weight of the fluoride supplied in the sealer composition by the total weight of the composition.

According to the present invention, the treatment composition may, in some instances, be substantially free, or in some instances, essentially free, or in some instances, completely free, of cobalt ions or cobalt-containing compounds. As used herein, "cobalt-containing compounds" include compounds, complexes or salts containing the element cobalt such as, for example, cobalt sulfate, cobalt nitrate, cobalt carbonate and cobalt acetate. When a composition and/or a layer or coating comprising the same is substantially free, essentially free, or completely free of cobalt, this includes cobalt ions or compounds containing cobalt in any form.

According to the present invention, the treatment composition may, in some instances, be substantially free, or in some instances, essentially free, or in some instances, completely free, of vanadium ions or vanadium-containing compounds. As used herein, "vanadium-containing compounds" include compounds, complexes or salts containing the element vanadium such as, for example, vanadates and decavanadates that include counterions of alkali metal or ammonium cations, including, for example, sodium ammonium decavanadate. When a composition and/or a layer or coating comprising the same is substantially free, essentially free, or completely free of vanadium, this includes vanadium ions or compounds containing vanadium in any form.

According to the present invention, the sealing composition may optionally further contain an indicator compound, so named because it indicates, for example, the presence of a chemical species, such as a metal ion, the pH of a composition, and the like. An "indicator", "indicator compound", and like terms as used herein refer to a compound that changes color in response to some external stimulus, parameter, or condition, such as the presence of a metal ion, or in response to a specific pH or range of pHs.

The indicator compound used according to the present invention can be any indicator known in the art that indicates the presence of a species, a particular pH, and the like. For example, a suitable indicator may be one that changes color after forming a metal ion complex with a particular metal ion. The metal ion indicator is generally a highly conjugated organic compound. A "conjugated compound" as used herein, and as will be understood by those skilled in the art, refers to a compound having two double bonds separated by a single bond, for example two carbon-carbon double bonds with a single carbon-carbon bond between them. Any conjugated compound can be used according to the present invention.

Similarly, the indicator compound can be one in which the color changes upon change of the pH; for example, the compound may be one color at an acidic or neutral pH and change color in an alkaline pH, or vice versa. Such indicators are well known and widely commercially available. An indicator that "changes color upon transition from a first pH to a second pH" (i.e., from a first pH to a second pH that is more or less acidic or alkaline) therefore has a first color (or is colorless) when exposed to a first pH and changes to a second color (or goes from colorless to colored) upon transition to a second pH (i.e., one that is either more or less acidic or alkaline than the first pH). For example, an indicator that "changes color upon transition to a more alkaline pH (or less acidic pH) goes from a first color/colorless to a second color/color when the pH transitions from acidic/neutral to alkaline. For example, an indicator that "changes color upon transition to a more acidic pH (or less alkaline pH) goes from a first color/colorless to a second color/color when the pH transitions from alkaline/neutral to acidic.

Non-limiting examples of such indicator compounds include methyl orange, xylenol orange, catechol violet, bromophenol blue, green and purple, eriochrome black T, Celestine blue, hematoxylin, calmagite, gallocyanine, and combinations thereof. Optionally, the indicator compound may comprise an organic indicator compound that is a metal ion indicator. Nonlimiting examples of indicator compounds include those found in Table 1. Fluorescent indicators, which will emit light in certain conditions, can also be used according to the present invention, although the use of a fluorescent indicator also may be specifically excluded. That is, alternatively, conjugated compounds that exhibit fluorescence are specifically excluded. As used herein, "fluorescent indicator" and like terms refer to compounds, molecules, pigments, and/or dyes that will fluoresce or otherwise exhibit color upon exposure to ultraviolet or visible light. To "fluoresce" will be understood as emitting light following absorption of shorter wavelength light or other electromagnetic radiation. Examples of such indicators, often referred to as "tags," include acridine, anthraquinone, coumarin, diphenylmethane, diphenylnaphthlymethane, quinoline, stilbene, triphenylmethane, anthracine and/or molecules containing any of these moieties and/or derivatives of any of these such as rhodamines, phenanthridines, oxazines, fluorones, cyanines and/or acridines.

**TABLE 1**

| Compound | Structure | CAS Reg. No. |
|---|---|---|
| Catechol Violet | 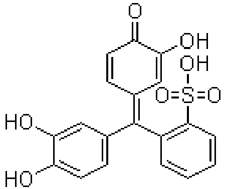 | 115-41-3 |
| Synonyms: | | |
| Catecholsulfonphthalein; | | |
| Pyrocatecholsulfonephthalein; | | |
| Pyrocatechol Violet | | |
| Xylenol Orange | 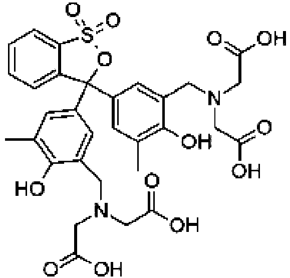 | 3618-43-7 |
| Synonym: | | |
| **3,3'-Bis[*N,N-*bis(carboxymethyl)aminomethyl]-*o*-cresolsulfonephthalein tetrasodium salt** | | |

According to the present invention, the conjugated compound useful as indicator may for example comprise catechol violet, as shown in Table 1. Catechol violet (CV) is a sulfone phthalein dye made from condensing two moles of pyrocatechol with one mole of o-sulfobenzoic acid anhydride. It has been found that CV has indicator properties and when incorporated into compositions having metal ions, it forms complexes, making it useful as a complexiometric reagent. As the composition containing the CV chelates metal ions coming from the metal substrate (i.e., those having bi- or higher valence), a generally blue to blue-violet color is observed.

Xylenol orange, as shown in Table 1 may likewise be employed in the compositions according to the present invention. It has been found that xylenol orange has metal ion (i.e., those having bi- or higher valence) indicator properties and when incorporated into compositions having metal ions, it forms complexes, making it useful as a complexiometric reagent. As the composition containing the xylenol orange chelates metal ions, a solution of xylenol orange turns from red to a generally blue color.

According to the present invention, the indicator compound may be present in the sealing composition in an amount of at least 0.01 g/1000 g sealing composition, such as at least 0.05 g/1000 g sealing composition, and in some instances, no more than 3 g/1000 g sealing composition, such as no more than 0.3g/1000 g sealing composition. According to the present invention, the indicator compound may be present in the sealing composition in an amount of 0.01 g/1000 g sealing composition to 3 g/1000 g sealing composition, such as 0.05 g/1000 g sealing composition to 0.3 g/1000 g sealing composition.

According to the present invention, the indicator compound changing color in response to a certain external stimulus provides a benefit when using the sealing composition in that it can serve, for example, as a visual indication that a substrate has been treated with the composition. For example, a sealing composition comprising an indicator that changes color when exposed to a metal ion that is present in the substrate will change color upon complexing with metal ions in that substrate; this allows the user to see that the substrate has been contacted with the composition. Similar benefits can be realized by depositing an alkaline or acid layer on a substrate and contacting the substrate with a composition of the present invention that changes color when exposed to an alkaline or acidic pH.

Optionally, the sealing composition of the present invention may further comprise a nitrogen-containing heterocyclic compound. The nitrogen-containing heterocyclic compound may include cyclic compounds having 1 nitrogen atom, such as pyrroles, and azole compounds having 2 or more nitrogen atoms, such as pyrazoles, imidazoles, triazoles, tetrazoles and pentazoles, 1 nitrogen atom and 1 oxygen atom, such as oxazoles and isoxazoles, or 1 nitrogen atom and 1 sulfur atom, such as thiazoles and isothiazoles. Nonlimiting examples of suitable azole compounds include 2,5-dimercapto-1,3,4-thiadiazole (CAS:1072-71-5), lH-benzotriazole (CAS: 95-14-7), lH-1,2,3-triazole (CAS: 288-36-8), 2-amino-5-mercapto-1,3,4-thiadiazole (CAS: 2349-67-9), also named 5-amino-1,3,4-thiadiazole-2-thiol, and 2-amino-1,3,4-thiadiazole (CAS: 4005-51-0). In some embodiments, for example, the azole compound comprises 2,5-dimercapto-1,3,4-thiadiazole. Additionally, according to the present invention, the nitrogen-containing heterocyclic compound may be in the form of a salt, such as a sodium salt.

The nitrogen-containing heterocyclic compound may be present in the sealing composition at a concentration of at least 0.0005 g per liter of composition, such as at least 0.0008 g per liter of composition, such as at least 0.002 g per liter of composition, and in some instances, may be present in the sealing composition in an amount of no more than 3 g per liter of composition, such as no more than 0.2 g per liter of composition, such as no more than 0.1 g per liter of composition. According to the present invention, the nitrogen-containing heterocyclic compound may be present in the sealing composition (if at all) at a concentration of 0.0005 g per liter of composition to 3 g per liter of composition, such as 0.0008 g per liter of composition to 0.2 g per liter of composition, such as 0.002 g per liter of composition to 0.1 g per liter of composition.

According to the present invention, the sealing composition may comprise an aqueous medium and optionally may contain other materials such as at least one organic solvent. Nonlimiting examples of suitable such solvents include propylene glycol, ethylene glycol, glycerol, low molecular weight alcohols, and the like. When present, if at all, the organic solvent may be present in the sealing composition in an amount of at least 1 g solvent per liter of sealing composition, such as at least about 2 g solvent per liter of sealing solution, and in some instances, may be present in an amount of no more than 40 g solvent per liter of sealing composition, such as no more than 20 g solvent per liter of sealing solution. According to the present invention, the organic solvent may be present in the sealing composition, if at all, in an amount of 1 g solvent per liter of sealing composition to 40 g solvent per liter of sealing composition, such as 2 g solvent per liter of sealing composition to 20 g solvent per liter of sealing composition.

According to the present invention, the pH of the sealing composition is at least 9.5, such as at least 10, such as at least 11, and is no higher than 12.5, such as no higher than 12, such as no higher than 11.5. According to the present invention, the pH of the sealing composition is 9.5 to 12.5, such as 10 to 12, such as 11 to 11.5. The pH of the sealing composition may be adjusted using, for example, any acid and/or base as is necessary. According to the present invention, the pH of the sealing composition may be maintained through the inclusion of an acidic material, including carbon dioxide, water soluble and/or water dispersible acids, such as nitric acid, sulfuric acid, and/or phosphoric acid. According to the present invention, the pH of the sealing composition may be maintained through the inclusion of a basic material, including water soluble and/or water dispersible bases, including carbonates such as Group I carbonates, Group II carbonates, hydroxides such as sodium hydroxide, potassium hydroxide, or ammonium hydroxide, ammonia, and/or amines such as triethylamine, methylethyl amine, or mixtures thereof.

As mentioned above, the sealing composition may comprise a carrier, often an aqueous medium, so that the composition is in the form of a solution or dispersion of the lithium cation in the carrier. According to the present invention, the solution or dispersion may be brought into contact with the substrate by any of a variety of known techniques, such as dipping or immersion, spraying, intermittent spraying, dipping followed by spraying, spraying followed by dipping, brushing, or roll-coating. According to the invention, the solution or dispersion when applied to the metal substrate may be at a temperature ranging from 4.44 °C to 71.1 °C (40 °F to about 160° F), such as 16 °C to 43 °C (60 °F to 110 °F). For example, the process of contacting the metal substrate with the sealing composition may be carried out at ambient or room temperature. The contact time is often from about 1 second to about 15 minutes, such as about 5 seconds to about 2 minutes.

According to the present invention, following the contacting with the sealing composition, the substrate optionally may be air dried at room temperature or may be dried with hot air, for example, by using an air knife, by flashing off the water by brief exposure of the substrate to a high temperature, such as by drying the substrate in an oven at 15°C to 100°C, such as 20 °C to 90 °C, or in a heater assembly using, for example, infrared heat, such as for 10 minutes at 70°C, or by passing the substrate between squeegee rolls. According to the present invention, the substrate surface may be partially, or in some instances, completely dried prior to any subsequent contact of the substrate surface with any water, solutions, compositions, or the like. As used herein with respect to a substrate surface, "completely dry" or "completely dried" means there is no moisture on the substrate surface visible to the human eye.

Optionally, according to the present invention, following the contacting with the sealing composition, the substrate optionally is not rinsed or contacted with any aqueous solutions prior to contacting at least a portion of the substrate surface with subsequent treatment compositions to form films, layers, and/or coatings thereon (described below).

Optionally, according to the present invention, following the contacting with the sealing composition, the substrate optionally may be contacted with tap water, deionized water, RO water and/or any aqueous solution known to those of skill in the art of substrate treatment, wherein such water or aqueous solution may be at a temperature of room temperature (16 °C (60°F)) to 100 °C (212°F). The substrate then optionally may be dried, for example air dried or dried with hot air as described in the preceding paragraph such that the substrate surface may be partially, or in some instances, completely dried prior to any subsequent contact of the substrate surface with any water, solutions, compositions, or the like.

According to the present invention, the thickness of the layer formed by the treatment composition may for instance be up to 550 nm, such as 5 nm to 550 nm, such as 10 nm to 400 nm, such as 25 nm to 250 nm. Thickness of layer formed from the treatment composition can be determined using a handful of analytical techniques including, but not limited to XPS (x-ray photoelectron spectroscopy) depth profiling or TEM (transmission electron microscopy). As used herein, "thickness," when used with respect to a layer formed by the treatment composition of the present invention, refers to either (a) a layer formed above the original air/substrate interface, (b) a modified layer formed below the pretreatment/substrate interface, or (c) a combination of (a) and (b), as illustrated in Fig. 1. Although modified layer (b) is shown extending to the pretreatment/substrate interface in Fig. 1, an intervening layer may be present between the modified layer (b) and the pretreatment/substrate interface. Likewise, (c), a combination of (a) and (b), is not limited to a continuous layer and may include multiple layers with intervening layers therebetween, and the measurement of the thickness of layer (c) may exclude the intervening layers.

According to the present invention, disclosed herein is a substrate comprising, or in some instances consisting essentially of, or in some instances consisting of: a film formed from a conversion composition comprising, or in some instances consisting of, or in some instances consisting essentially of, trivalent chromium.

According to the present invention, disclosed herein is a substrate comprising, or in some instances consisting essentially of, or in some instances consisting of: a film formed from a conversion composition comprising, or in some instances consisting of, or in some instances consisting essentially of, trivalent chromium; and a layer having a thickness of 5 nm to 550 nm, such as 10 nm to 400 nm, such as 25 nm to 250 nm formed from a sealing composition.

According to the present invention, disclosed herein is a method of treating a substrate comprising, or in some instances consisting essentially of, or in some instances consisting of, contacting at least a portion of the substrate surface with a conversion composition comprising, or in some instances consisting of, or in some instances consisting essentially of, trivalent chromium.

According to the present invention, disclosed herein is a method of treating a substrate comprising, or in some instances consisting essentially of, or in some instances consisting of, contacting at least a portion of the substrate with a conversion composition comprising, or in some instances consisting of, or in some instances consisting essentially of, trivalent chromium; and contacting the surface contacted with the conversion composition with a sealing composition.

It has been surprisingly discovered that corrosion performance was improved when a substrate was treated with a lithium-containing sealing composition (i.e., one that does not contain hydrogen peroxide) following conventional cleaning and deoxidation treatments and treatment with a trivalent chromium conversion composition compared to a substrate treated with a sealing composition containing hydrogen peroxide. These results were unexpected.

According to the present invention, after the substrate is contacted with the sealing composition, a coating composition comprising a film-forming resin may be deposited onto at least a portion of the surface of the substrate that has been contacted with the sealing composition. Any suitable technique may be used to deposit such a coating composition onto the substrate, including, for example, brushing, dipping, flow coating, spraying and the like. In some instances, however, as described in more detail below, such depositing of a coating composition may comprise an electrocoating step wherein an electrodepositable composition is deposited onto a metal substrate by electrodeposition. In certain other instances, as described in more detail below, such depositing of a coating composition comprises a powder coating step. In still other instances, the coating composition may be a liquid coating composition.

According to the present invention, the coating composition may comprise a thermosetting film-forming resin or a thermoplastic film-forming resin. As used herein, the term "film-forming resin" refers to resins that can form a self-supporting continuous film on at least a horizontal surface of a substrate upon removal of any diluents or carriers present in the composition or upon curing at ambient or elevated temperature. Conventional film-forming resins that may be used include, without limitation, those typically used in automotive OEM coating compositions, automotive refinish coating compositions, industrial coating compositions, architectural coating compositions, coil coating compositions, and aerospace coating compositions, among others. **As used** herein, the term "thermosetting" refers to resins that "set" irreversibly upon curing or crosslinking, wherein the polymer chains of the polymeric components are joined together by covalent bonds. This property is usually associated with a cross-linking reaction of the composition constituents often induced, for example, by heat or radiation. Curing or crosslinking reactions also may be carried out under ambient conditions. Once cured or crosslinked, a thermosetting resin will not melt upon the application of heat and is insoluble in solvents. As used herein, the term "thermoplastic" refers to resins that comprise polymeric components that are not joined by covalent bonds and thereby can undergo liquid flow upon heating and are soluble in solvents.

As previously indicated, according to the present invention, an electrodepositable coating composition comprising a water-dispersible, ionic salt group-containing film-forming resin that may be deposited onto the substrate by an electrocoating step wherein the electrodepositable coating composition is deposited onto the metal substrate by electrodeposition.

The ionic salt group-containing film-forming polymer may comprise a cationic salt group containing film-forming polymer for use in a cationic electrodepositable coating composition. As used herein, the term "cationic salt group-containing film-forming polymer" refers to polymers that include at least partially neutralized cationic groups, such as sulfonium groups and ammonium groups, that impart a positive charge. The cationic salt group-containing film-forming polymer may comprise active hydrogen functional groups, including, for example, hydroxyl groups, primary or secondary amine groups, and thiol groups. Cationic salt group-containing film-forming polymers that comprise active hydrogen functional groups may be referred to as active hydrogen-containing, cationic salt group-containing film-forming polymers. Examples of polymers that are suitable for use as the cationic salt group-containing film-forming polymer include, but are not limited to, alkyd polymers, acrylics, polyepoxides, polyamides, polyurethanes, polyureas, polyethers, and polyesters, among others.

The cationic salt group-containing film-forming polymer may be present in the cationic electrodepositable coating composition in an amount of 40% to 90% by weight, such as 50% to 80% by weight, such as 60% to 75% by weight, based on the total weight of the resin solids of the electrodepositable coating composition. As used herein, the "resin solids" include the ionic salt group-containing film-forming polymer, curing agent, and any additional water-dispersible non-pigmented component(s) present in the electrodepositable coating composition.

Alternatively, the ionic salt group containing film-forming polymer may comprise an anionic salt group containing film-forming polymer for use in an anionic electrodepositable coating composition. As used herein, the term "anionic salt group containing film-forming polymer" refers to an anionic polymer comprising at least partially neutralized anionic functional groups, such as carboxylic acid and phosphoric acid groups that impart a negative charge. The anionic salt group-containing film-forming polymer may comprise active hydrogen functional groups. Anionic salt group-containing film-forming polymers that comprise active hydrogen functional groups may be referred to as active hydrogen-containing, anionic salt group-containing film-forming polymers.

The anionic salt group-containing film-forming polymer may comprise base-solubilized, carboxylic acid group-containing film-forming polymers such as the reaction product or adduct of a drying oil or semi-drying fatty acid ester with a dicarboxylic acid or anhydride; and the reaction product of a fatty acid ester, unsaturated acid or anhydride and any additional unsaturated modifying materials which are further reacted with polyol. Also suitable are the at least partially neutralized interpolymers of hydroxy-alkyl esters of unsaturated carboxylic acids, unsaturated carboxylic acid and at least one other ethylenically unsaturated monomer. Still another suitable anionic electrodepositable resin comprises an alkyd-aminoplast vehicle, i.e., a vehicle containing an alkyd resin and an amine-aldehyde resin. Another suitable anionic electrodepositable resin composition comprises mixed esters of a resinous polyol. Other acid functional polymers may also be used such as phosphatized polyepoxide or phosphatized acrylic polymers. Exemplary phosphatized polyepoxides are disclosed in U.S. Patent Application Publication No. 2009-0045071 at [0004]-[0015] and U.S. Patent Application Ser. No. 13/232,093 at [0014]-[0040].

The anionic salt group-containing film-forming polymer may be present in the anionic electrodepositable coating composition in an amount 50% to 90%, such as 55% to 80%, such as 60% to 75%, based on the total weight of the resin solids of the electrodepositable coating composition.

The electrodepositable coating composition may further comprise a curing agent. The curing agent may react with the reactive groups, such as active hydrogen groups, of the ionic salt group-containing film-forming polymer to effectuate cure of the coating composition to form a coating. Non-limiting examples of suitable curing agents are at least partially blocked polyisocyanates, aminoplast resins and phenoplast resins, such as phenolformaldehyde condensates including allyl ether derivatives thereof.

The curing agent may be present in the cationic electrodepositable coating composition in an amount of 10% to 60% by weight, such as 20% to 50% by weight, such as 25% to 40% by weight, based on the total weight of the resin solids of the electrodepositable coating composition. Alternatively, the curing agent may be present in the anionic electrodepositable coating composition in an amount of 10% to 50% by weight, such as 20% to 45% by weight, such as 25% to 40% by weight, based on the total weight of the resin solids of the electrodepositable coating composition.

The electrodepositable coating composition may further comprise other optional ingredients, such as a pigment composition and, if desired, various additives such as fillers, plasticizers, anti-oxidants, biocides, UV light absorbers and stabilizers, hindered amine light stabilizers, defoamers, fungicides, dispersing aids, flow control agents, surfactants, wetting agents, or combinations thereof.

The electrodepositable coating composition may comprise water and/or one or more organic solvent(s). Water can for example be present in amounts of 40% to 90% by weight, such as 50% to 75% by weight, based on total weight of the electrodepositable coating composition. If used, the organic solvents may typically be present in an amount of less than 10% by weight, such as less than 5% by weight, based on total weight of the electrodepositable coating composition. The electrodepositable coating composition may in particular be provided in the form of an aqueous dispersion. The total solids content of the electrodepositable coating composition may be from 1% to 50% by weight, such as 5% to 40% by weight, such as 5% to 20% by weight, based on the total weight of the electrodepositable coating composition. As used herein, "total solids" refers to the non-volatile content of the electrodepositable coating composition, i.e., materials which will not volatilize when heated to 110°C for 15 minutes.

The cationic electrodepositable coating composition may be deposited upon an electrically conductive substrate by placing the composition in contact with an electrically conductive cathode and an electrically conductive anode, with the surface to be coated being the cathode. Alternatively, the anionic electrodepositable coating composition may be deposited upon an electrically conductive substrate by placing the composition in contact with an electrically conductive cathode and an electrically conductive anode, with the surface to be coated being the anode. An adherent film of the electrodepositable coating composition is deposited in a substantially continuous manner on the cathode or anode, respectively, when a sufficient voltage is impressed between the electrodes. The applied voltage may be varied and can be, for example, as low as one volt to as high as several thousand volts, such as between 50 and 500 volts. Current density is usually between 1.0 ampere and 15 amperes per square foot (10.8 to 161.5 amperes per square meter) and tends to decrease quickly during the electrodeposition process, indicating formation of a continuous self-insulating film.

Once the cationic or anionic electrodepositable coating composition is electrodeposited over at least a portion of the electroconductive substrate, the coated substrate is heated to a temperature and for a time sufficient to cure the electrodeposited coating on the substrate. For cationic electrodeposition, the coated substrate may be heated to a temperature ranging from 121.1°C to 232.2°C (250°F to 450°F), such as from 135°C to 204.4°C (275°F to 400°F), such as from 149°C to 180°C (300°F to 360°F) . For anionic electrodeposition, the coated substrate may be heated to a temperature ranging from 93°C to 232.2°C (200°F to 450°F), such as from 135°C to 204.4°C (275°F to 400°F), such as from 149°C to 180°C (300°F to 360°F), such as 93°C to 99°C (200°F to 210.2°F). The curing time may be dependent upon the curing temperature as well as other variables, for example, the film thickness of the electrodeposited coating, level and type of catalyst present in the composition and the like. For example, the curing time can range from 10 minutes to 60 minutes, such as 20 to 40 minutes. The thickness of the resultant cured electrodeposited coating may range from 2 to 50 microns.

Alternatively, as mentioned above, according to the present invention, after the substrate has been contacted with the sealing composition, a powder coating composition may then be deposited onto at least a portion of the surface of the substrate. As used herein, "powder coating composition" refers to a coating composition which is completely free of water and/or solvent. Accordingly, the powder coating composition disclosed herein is not synonymous to waterborne and/or solvent-borne coating compositions known in the art.

According to the present invention, the powder coating composition may comprise (a) a film forming polymer having a reactive functional group; and (b) a curing agent that is reactive with the functional group. Examples of powder coating compositions that may be used in the present invention include the polyester-based ENVIROCRON line of powder coating compositions (commercially available from PPG Industries, Inc.) or epoxy-polyester hybrid powder coating compositions. Alternative examples of powder coating compositions that may be used in the present invention include low temperature cure thermosetting powder coating compositions comprising (a) at least one tertiary aminourea compound, at least one tertiary aminourethane compound, or mixtures thereof, and (b) at least one film-forming epoxy-containing resin and/or at least one siloxane-containing resin (such as those described in US Patent No. 7,470,752, assigned to PPG Industries, Inc.); curable powder coating compositions generally comprising (a) at least one tertiary aminourea compound, at least one tertiary aminourethane compound, or mixtures thereof, and (b) at least one film-forming epoxy-containing resin and/or at least one siloxane-containing resin (such as those described in US Patent No. 7,432,333, assigned to PPG Industries, Inc.); and those ccomprising a solid particulate mixture of a reactive group-containing polymer having a T_{g} of at least 30°C (such as those described in US Patent No. 6,797,387, assigned to PPG Industries, Inc.).

After deposition of the powder coating composition, the coating is often heated to cure the deposited composition. The heating or curing operation is often carried out at a temperature in the range of from 150°C to 200°C, such as from 170°C to 190°C, for a period of time ranging from 10 to 20 minutes. According to the invention, the thickness of the resultant film is from 50 microns to 125 microns.

As mentioned above, according to the present invention, the coating composition may be a liquid coating composition. As used herein, "liquid coating composition" refers to a coating composition which contains a portion of water and/or solvent. Accordingly, the liquid coating composition disclosed herein is synonymous to waterborne and/or solventborne coating compositions known in the art.

According to the present invention, the liquid coating composition may comprise, for example, (a) a film forming polymer having a reactive functional group; and (b) a curing agent that is reactive with the functional group. In other examples, the liquid coating may contain a film forming polymer that may react with oxygen in the air or coalesce into a film with the evaporation of water and/or solvents. These film forming mechanisms may require or be accelerated by the application of heat or some type of radiation such as Ultraviolet or Infrared. Examples of liquid coating compositions that may be used in the present invention include the SPECTRACRON^{®} line of solventbased coating compositions, the AQUACRON^{®} line of waterbased coating compositions, and the RAYCRON^{®} line of UV cured coatings (all commercially available from PPG Industries, Inc.).

Suitable film forming polymers that may be used in the liquid coating composition of the present invention may comprise a (poly)ester, an alkyd, a (poly)urethane, an isocyanurate, a (poly)urea, a (poly)epoxy, an anhydride, an acrylic, a (poly)ether, a (poly)sulfide, a (poly)amine, a (poly)amide, (poly)vinyl chloride, (poly)olefin, (poly)vinylidene fluoride, (poly)siloxane, or combinations thereof.

According to the present invention, the substrate that has been contacted with the sealing composition may also be contacted with a primer composition and/or a topcoat composition. The primer coat may be, for examples, chromate-based primers and advanced performance topcoats. According to the present invention, the primer coat can be a conventional chromate based primer coat, such as those available from PPG Industries, Inc. (product code 44GN072), or a chrome-free primer such as those available from PPG (DESOPRIME CA7502, DESOPRIME CA7521, Deft 02GN083, Deft 02GN084). Alternately, the primer coat can be a chromate-free primer coat, such as the coating compositions described in U.S. patent application Ser. No. 10/758,973, titled "CORROSION RESISTANT COATINGS CONTAINING CARBON", and U.S. patent application Ser. Nos. 10/758,972, and 10/758,972, both titled "CORROSION RESISTANT COATINGS", and other chrome-free primers that are known in the art, and which can pass the military requirement of MIL-PRF-85582 Class N or MIL-PRF-23377 Class N may also be used with the current invention.

As mentioned above, the substrate of the present invention also may comprise a topcoat. As used herein, the term "topcoat" refers to a mixture of binder(s) which can be an organic or inorganic based polymer or a blend of polymers, typically at least one pigment, can optionally contain at least one solvent or mixture of solvents, and can optionally contain at least one curing agent. A topcoat is typically the coating layer in a single or multi-layer coating system whose outer surface is exposed to the atmosphere or environment, and its inner surface is in contact with another coating layer or polymeric substrate. Examples of suitable topcoats include those conforming to MIL-PRF-85285D, such as those available from PPG (Deft 03W127A and Deft 03GY292). According to the present invention, the topcoat may be an advanced performance topcoat, such as those available from PPG (Defthane^{®} ELT.TM. 99GY001 and 99WO09). However, other topcoats and advanced performance topcoats can be used in the present invention as will be understood by those of skill in the art with reference to this disclosure.

According to the present invention, the metal substrate also may comprise a self-priming topcoat, or an enhanced self-priming topcoat. The term "self-priming topcoat", also referred to as a "direct to substrate" or "direct to metal" coating, refers to a mixture of a binder(s), which can be an organic or inorganic based polymer or blend of polymers, typically at least one pigment, can optionally contain at least one solvent or mixture of solvents, and can optionally contain at least one curing agent. The term "enhanced self-priming topcoat", also referred to as an "enhanced direct to substrate coating" refers to a mixture of functionalized fluorinated binders, such as a fluoroethylene-alkyl vinyl ether in whole or in part with other binder(s), which can be an organic or inorganic based polymer or blend of polymers, typically at least one pigment, can optionally contain at least one solvent or mixture of solvents, and can optionally contain at least one curing agent. Examples of self-priming topcoats include those that conform to TT-P-2756A. Examples of self-priming topcoats include those available from PPG (03W169 and 03GY369), and examples of enhanced self-priming topcoats include Defthane^{®} ELT^{™}/ESPT and product code number 97GY121, available from PPG. However, other self-priming topcoats and enhanced self-priming topcoats can be used in the coating system according to the present invention as will be understood by those of skill in the art with reference to this disclosure.

According to the present invention, the self-priming topcoat and enhanced self-priming topcoat may be applied directly to the sealed substrate. The self-priming topcoat and enhanced self-priming topcoat can optionally be applied to an organic or inorganic polymeric coating, such as a primer or paint film. The self-priming topcoat layer and enhanced self-priming topcoat is typically the coating layer in a single or multi-layer coating system where the outer surface of the coating is exposed to the atmosphere or environment, and the inner surface of the coating is typically in contact with the substrate or optional polymer coating or primer.

According to the present invention, the topcoat, self-priming topcoat, and enhanced self-priming topcoat can be applied to the sealed substrate, in either a wet or "not fully cured" condition that dries or cures over time, that is, solvent evaporates and/or there is a chemical reaction. The coatings can dry or cure either naturally or by accelerated means for example, an ultraviolet light cured system to form a film or "cured" paint. The coatings can also be applied in a semi or fully cured state, such as an adhesive.

In addition, a colorant and, if desired, various additives such as surfactants, wetting agents or catalyst can be included in the coating composition (electrodepositable, powder, or liquid). As used herein, the term "colorant" means any substance that imparts color and/or other opacity and/or other visual effect to the composition. Example colorants include pigments, dyes and tints, such as those used in the paint industry and/or listed in the Dry Color Manufacturers Association (DCMA), as well as special effect compositions.

In general, the colorant can be present in the coating composition in any amount sufficient to impart the desired visual and/or color effect. The colorant may comprise from 1 to 65 weight percent, such as from 3 to 40 weight percent or 5 to 35 weight percent, with weight percent based on the total weight of the composition.

For purposes of the following detailed description, it is to be understood that the invention may assume various alternative variations and step sequences, except where expressly specified to the contrary. Moreover, other than in any operating examples, or where otherwise indicated, all numbers such as those expressing values, amounts, percentages, ranges, subranges and fractions may be read as if prefaced by the word "about," even if the term does not expressly appear. Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques. Where a closed or open-ended numerical range is described herein, all numbers, values, amounts, percentages, subranges and fractions within or encompassed by the numerical range are to be considered as being specifically included in and belonging to the original disclosure of this application as if these numbers, values, amounts, percentages, subranges and fractions had been explicitly written out in their entirety.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

As used herein, unless indicated otherwise, a plural term can encompass its singular counterpart and vice versa, unless indicated otherwise. For example, although reference is made herein to "a" cleaner composition, "a" conversion composition, and "a" sealing composition, a combination (i.e., a plurality) of these components can be used. In addition, in this application, the use of "or" means "and/or" unless specifically stated otherwise, even though "and/or" may be explicitly used in certain instances.

As used herein, "including," "containing" and like terms are understood in the context of this application to be synonymous with "comprising" and are therefore open-ended and do not exclude the presence of additional undescribed and/or unrecited elements, materials, ingredients and/or method steps. As used herein, "consisting of" is understood in the context of this application to exclude the presence of any unspecified element, ingredient and/or method step. As used herein, "consisting essentially of" is understood in the context of this application to include the specified elements, materials, ingredients and/or method steps "and those that do not materially affect the basic and novel characteristic(s)" of what is being described.

As used herein, the terms "on," "onto," "applied on," "applied onto," "formed on," "deposited on," "deposited onto," mean formed, overlaid, deposited, and/or provided on but not necessarily in contact with the surface. For example, a coating layer "formed over" a substrate does not preclude the presence of one or more other intervening coating layers of the same or different composition located between the formed coating layer and the substrate.

Unless otherwise disclosed herein, the term "substantially free," when used with respect to the absence of a particular material, means that such material, if present at all in a composition, a bath containing the composition, and/or layers formed from and comprising the composition, only is present in a trace amount of 5 ppm or less based on a total weight of the composition or layer(s), as the case may be, excluding any amount of such material that may be present or derived as a result of drag-in, substrate(s), and/or dissolution of equipment). Unless otherwise disclosed herein, the term "essentially free," when used with respect to the absence of a particular material, means that such material, if present at all in a composition, a bath containing the composition, and/or layers formed from and comprising the composition, only is present in a trace amount of 1 ppm or less based on a total weight of the composition or layer(s), as the case may be. Unless otherwise disclosed herein, the term "completely free," when used with respect to the absence of a particular material, means that such material, if present at all in a composition, a bath containing the composition, and/or layers formed from and comprising the composition, is absent from the composition, the bath containing the composition, and/or layers formed from and comprising same (i.e., the composition, bath containing the composition, and/or layers formed from and comprising the composition contain 0 ppm of such material).

As used herein, a "salt" refers to an ionic compound made up of metal cations and non-metallic anions and having an overall electrical charge of zero. Salts may be hydrated or anhydrous.

As used herein, "aqueous composition" refers to solution or dispersion in a medium that comprises predominantly water. For example, the aqueous medium may comprise water in an amount of more than 50 wt.%, or more than 70 wt.% or more than 80 wt.% or more than 90 wt.% or more than 95 wt.%, based on the total weight of the medium. The aqueous medium may for example consist substantially of water.

As used herein, "conversion composition" refers to a composition that is capable of reacting with and chemically altering the substrate surface and binding to it to form a film that affords corrosion protection.

As used herein, a "sealing composition" refers to a composition, e.g. a solution or dispersion, that affects a substrate surface or a material deposited onto a substrate surface in such a way as to alter the physical and/or chemical properties of the substrate surface (i.e., the composition affords corrosion protection).

As used herein, the term "oxidizing agent," when used with respect to a component of the sealing composition, refers to a chemical which is capable of oxidizing at least one of: a metal present in the substrate which is contacted by the sealing composition and/or a metal-complexing agent present in the sealing composition. As used herein with respect to "oxidizing agent," the phrase "capable of oxidizing" means capable of removing electrons from an atom or a molecule present in the substrate or the sealing composition, as the case may be, thereby decreasing the number of electrons.

As used herein, the term "transition metal" refers to an element that is in any of Groups IIIB to XIIB of the CAS version of the Periodic Table of Elements as is shown, excluding the lanthanide series elements and elements 89-103, for example, in the Handbook of Chemistry and Physics, 63rd edition (1983), corresponding to Groups 3 to 12 in the actual IUPAC numbering.

As used herein, the term "transition metal compound" refers to compounds that include at least one element that is a transition metal of the CAS version of the Periodic Table of the Elements.

As used herein, the term "Group IA metal" refers to an element that is in Group IA of the CAS version of the Periodic Table of the Elements as is shown, for example, in the Handbook of Chemistry and Physics, 63rd edition (1983), corresponding to Group 1 in the actual IUPAC numbering.

As used herein, the term "Group IA metal compound" refers to compounds that include at least one element that is in Group IA of the CAS version of the Periodic Table of the Elements.

As used herein, the term "Group IIA metal" refers to an element that is in Group IA of the CAS version of the Periodic Table of the Elements as is shown, for example, in the Handbook of Chemistry and Physics, 63rd edition (1983), corresponding to Group 2 in the actual IUPAC numbering.

As used herein, the term "Group IIA metal compound" refers to compounds that include at least one element that is in Group IIA of the CAS version of the Periodic Table of the Elements.

As used herein, the term "Group IIIB metal" refers to yttrium and scandium of the CAS version of the Periodic Table of the Elements as is shown, for example, in the Handbook of Chemistry and Physics, 63rd edition (1983), corresponding to Group 3 in the actual IUPAC numbering. For clarity, "Group IIIB metal" expressly excludes lanthanide series elements.

As used herein, the term "Group IIIB metal compound" refers to compounds that include at least one element that is in group IIIB of the CAS version of the Periodic Table of the Elements as defined above.

As used herein, the term "Group IVB metal" refers to an element that is in group IVB of the CAS version of the Periodic Table of the Elements as is shown, for example, in the Handbook of Chemistry and Physics, 63rd edition (1983), corresponding to Group 4 in the actual IUPAC numbering.

As used herein, the term "Group IVB metal compound" refers to compounds that include at least one element that is in Group IVB of the CAS version of the Periodic Table of the Elements.

As used herein, the term "Group VB metal" refers to an element that is in group VB of the CAS version of the Periodic Table of the Elements as is shown, for example, in the Handbook of Chemistry and Physics, 63rd edition (1983), corresponding to Group 5 in the actual IUPAC numbering.

As used herein, the term "Group VB metal compound" refers to compounds that include at least one element that is in Group VB of the CAS version of the Periodic Table of the Elements.

As used herein, the term "Group VIB metal" refers to an element that is in group VIB of the CAS version of the Periodic Table of the Elements as is shown, for example, in the Handbook of Chemistry and Physics, 63rd edition (1983), corresponding to Group 6 in the actual IUPAC numbering.

As used herein, the term "Group VIB metal compound" refers to compounds that include at least one element that is in Group VIB of the CAS version of the Periodic Table of the Elements.

As used herein, the term "Group VIIB metal" refers to an element that is in group VIB of the CAS version of the Periodic Table of the Elements as is shown, for example, in the Handbook of Chemistry and Physics, 63rd edition (1983), corresponding to Group 7 in the actual IUPAC numbering.

As used herein, the term "Group VIIB metal compound" refers to compounds that include at least one element that is in Group VIIB of the CAS version of the Periodic Table of the Elements.

As used herein, the term "Group XII metal" refers to an element that is in group VIB of the CAS version of the Periodic Table of the Elements as is shown, for example, in the Handbook of Chemistry and Physics, 63rd edition (1983), corresponding to Group 12 in the actual IUPAC numbering.

As used herein, the term "Group XII metal compound" refers to compounds that include at least one element that is in Group XII of the CAS version of the Periodic Table of the Elements.

As used herein, the term "lanthanide series elements" refers to elements 57-71 of the CAS version of the Periodic Table of the Elements and includes elemental versions of the lanthanide series elements. According to the invention, the lanthanide series elements may be those which have both common oxidation states of +3 and +4, referred to hereinafter as +3/+4 oxidation states.

As used herein, the term "lanthanide compound" refers to compounds that include at least one of elements 57-71 of the CAS version of the Periodic Table of the Elements.

As used herein, the term "halogen" refers to any of the elements fluorine, chlorine, bromine, iodine, and astatine of the CAS version of the Periodic Table of the Elements, corresponding to Group VIIA of the periodic table.

As used herein, the term "halide" refers to compounds that include at least one halogen.

As used herein, the term "aluminum," when used in reference to a substrate, refers to substrates made of or comprising aluminum and/or aluminum alloy, and clad aluminum substrates.

Pitting corrosion is the localized formation of corrosion by which cavities or holes are produced in a substrate. The term "pit," as used herein, refers to such cavities or holes resulting from pitting corrosion and is characterized by (1) a rounded, elongated or irregular appearance when viewed normal to the test panel surface, (2) a "comet-tail", a line, or a "halo" (i.e., a surface discoloration) emanating from the pitting cavity, and (3) the presence of corrosion byproduct (e.g., white, grayish or black granular, powdery or amorphous material) inside or immediately around the pit. An observed surface cavity or hole must exhibit at least two of the above characteristics to be considered a corrosion pit. Surface cavities or holes that exhibit only one of these characteristics may require additional analysis before being classified as a corrosion pit. Visual inspection using a microscope with 10X magnification is used to determine the presence of corrosion byproducts when corrosion byproducts are not visible with the unaided eye.

Unless otherwise disclosed herein, as used herein, the terms "total composition weight", "total weight of a composition" or similar terms refer to the total weight of all ingredients being present in the respective composition including any carriers and solvents.

All parts and percentages in the examples, as well as throughout the specification, are by weight unless otherwise indicated.

### EXAMPLES

The cleaning composition of Example A was prepared using the ingredients shown in Table 2 by dissolving the ingredients in deionized water under mild agitation using a stir plate.

The sealing composition of Example B was prepared using the ingredients shown in Table 2 by dissolving lithium carbonate in deionized water under mild agitation using a stir plate.

The sealing composition of Example C prepared using the ingredients shown in Table 2 by dissolving lithium carbonate in deionized water under mild agitation using a stir plate. Next, the 2,5-dimercapto-1,3,4-thiadiazole and then the catechol violet were added and dissolved under mild agitation as described above.

**Table 2. Compositions**

| **Material** | **Example A (cleaning composition) (%,w/w)** | **Example B (sealing composition) (%, w/w)** | **Example C (sealing composition) (%, w/w)** |
|---|---|---|---|
| Caustic soda | 0.16 | ---- | ---- |
| Trisodium phosphate | 0.63 | ---- | ---- |
| Polyvinylpyrrolidone | 0.002 | ---- | ---- |
| Allantoin | 0.003 | ---- | ---- |
| Carbowet GAlO0 | 0.41 | ---- | ---- |
| lithium carbonate (99%), grams | ---- | 0.15 | 0.4 |
| deionized water, grams | 98.7 | 99.85 | 99.54 |
| 2,5-dimercapto-1,3,4-thiadiazole | 0.1 | ---- | 0.06 |
| Catechol violet | ---- | ---- | 0.001 |

For Examples 1-7, unless indicated otherwise, each bath was 12 L.

### EXAMPLE 1 (comparative)

Three aluminum 2024T3 bare substrate (Priority Metals, Orange County, CA) each measuring 7.62 cm × 25.40 cm × 0.081cm (3" x 10" x 0.032") were hand-wiped with methyl ethyl ketone (100%) and a disposable cloth and allowed to air dry prior to chemical cleaning. Each panel was immersed in a bath containing SOCOCLEAN A3432 (a cleaning composition commercially available from Socomore, prepared according to manufacturer's instructions) for 10 minutes at 55°C with agitation. Each panel was then spray rinsed for 30 seconds with deionized water followed immediately by an immersion in a deionized water rinse for two minutes. After the immersion rinse, each panel was then immersed in a bath containing SOCOSURF Al858-Al806 (a deoxidizer commercially available from Socomore, prepared according to the manufacturer's instructions) for 5 minutes at 50°C with agitation. Each panel was then spray rinsed for 30 seconds with deionized water followed immediately by an immersion in a deionized water rinse for two minutes. After the immersion rinse, each panel was then immersed in a bath containing SOCOSURF TCS (a trivalent chromium-containing conversion composition commercially available from Socomore, prepared according to manufacturer's instructions) for 5 minutes at 40°C without agitation. Each panel was then spray rinsed for 2 minutes with deionized water followed immediately by an immersion in a deionized water rinse for two minutes. The panel was air dried at ambient conditions overnight before testing.

### EXAMPLE 2 (comparative)

Three aluminum 2024T3 bare substrate (Priority Metals, Orange County, CA) each measuring 7.62 cm × 25.40 cm × 0.081cm (3" x 10" x 0.032") were hand-wiped with methyl ethyl ketone (100%) and a disposable cloth and allowed to air dry prior to chemical cleaning. Each panel was immersed in a bath containing SOCOCLEAN A3432 (a cleaning composition commercially available from Socomore, prepared according to manufacturer's instructions) for 10 minutes at 55°C with agitation. Each panel was then spray rinsed for 30 seconds with deionized water followed immediately by an immersion in a deionized water rinse for two minutes. After the immersion rinse, each panel was then immersed in a bath containing SOCOSURF Al858-Al806 (a deoxidizer commercially available from Socomore, prepared according to the manufacturer's instructions) for 5 minutes at 50°C with agitation. Each panel was then spray rinsed for 30 seconds with deionized water followed immediately by an immersion in a deionized water rinse for two minutes. After the immersion rinse, each panel was then immersed in a bath containing SOCOSURF TCS (a trivalent chromium-containing conversion composition commercially available from Socomore, prepared according to manufacturer's instructions) for 5 minutes at 40°C without agitation. Each panel was then spray rinsed for 2 minutes with deionized water followed immediately by an immersion in a deionized water rinse for two minutes. Each panel was then immersed in a bath containing SOCOSURF PACS (a sealing composition containing H202, commercially available from Socomore, prepared according to manufacturer's instructions) for 5 minutes at 25°C with agitation. The panel was air dried at ambient conditions overnight before testing.

### EXAMPLE 3 (comparative)

Three aluminum 2024T3 bare substrate (Priority Metals, Orange County, CA) each measuring 7.62 cm × 25.40 cm × 0.081cm (3" x 10" x 0.032") were hand-wiped with methyl ethyl ketone (100%) and a disposable cloth and allowed to air dry prior to chemical cleaning. Each panel was immersed in a bath containing SOCOCLEAN A3432 (a cleaning composition commercially available from Socomore, prepared according to manufacturer's instructions) for 10 minutes at 55°C with agitation. Each panel was then spray rinsed for 30 seconds with deionized water followed immediately by an immersion in a deionized water rinse for two minutes. After the immersion rinse, each panel was then immersed in a bath containing SOCOSURF Al858-Al806 (a deoxidizer commercially available from Socomore, prepared according to the manufacturer's instructions) for 5 minutes at 50°C with agitation. Each panel was then spray rinsed for 30 seconds with deionized water followed immediately by an immersion in a deionized water rinse for two minutes. After the immersion rinse, each panel was then immersed in a bath containing SOCOSURF TCS (a trivalent chromium-containing conversion composition commercially available from Socomore, prepared according to manufacturer's instructions) for 5 minutes at 40°C without agitation. Each panel was then spray rinsed for 2 minutes with deionized water followed immediately by an immersion in a deionized water rinse for two minutes. Each panel was then immersed in a bath containing the sealing composition of Example B for 2 minutes at ambient temperature without agitation. The panel was air dried at ambient conditions overnight before testing.

### EXAMPLE 4 (comparative)

Three aluminum 2024T3 bare substrate (Priority Metals, Orange County, CA) each measuring 7.62 cm × 25.40 cm × 0.081cm (3" x 10" x 0.032") were hand-wiped with methyl ethyl ketone (100%) and a disposable cloth and allowed to air dry prior to chemical cleaning. Each panel was immersed in a bath containing SOCOCLEAN A3432 (a cleaning composition commercially available from Socomore, prepared according to manufacturer's instructions) for 10 minutes at 55°C with agitation. Each panel was then spray rinsed for 30 seconds with deionized water followed immediately by an immersion in a deionized water rinse for two minutes. After the immersion rinse, each panel was then immersed in a bath containing SOCOSURF A1858-A1806 (a deoxidizer commercially available from Socomore, prepared according to the manufacturer's instructions) for 5 minutes at 50°C with agitation. Each panel was then spray rinsed for 30 seconds with deionized water followed immediately by an immersion in a deionized water rinse for two minutes. After the immersion rinse, each panel was then immersed in a bath containing SOCOSURF TCS (a trivalent chromium-containing conversion composition commercially available from Socomore, prepared according to manufacturer's instructions) for 5 minutes at 40°C without agitation. Each panel was then spray rinsed for 2 minutes with deionized water followed immediately by an immersion in a deionized water rinse for two minutes. Each panel was then immersed in a bath containing the sealing composition of Example C for 2 minutes at ambient temperature without agitation. The panel was air dried at ambient conditions overnight before testing.

### EXAMPLE 5

Three aluminum 2024T3 bare substrate (Priority Metals, Orange County, CA) each measuring 7.62 cm × 25.40 cm × 0.081cm (3" x 10" x 0.032") were hand-wiped with methyl ethyl ketone (100%) and a disposable cloth and allowed to air dry prior to chemical cleaning. Each panel was immersed in a bath containing the cleaning composition of Example A for 4.5 minutes at ambient temperature with agitation. Each panel was then spray rinsed for 30 seconds with deionized water followed immediately by an immersion in a deionized water rinse for two minutes. After the immersion rinse, each panel was then immersed in a bath containing SOCOSURF TCS (a trivalent chromium-containing conversion composition commercially available from Socomore, prepared according to manufacturer's instructions) for 5 minutes at 40°C without agitation. Each panel was then spray rinsed for 2 minutes with deionized water followed immediately by an immersion in a deionized water rinse for two minutes. Each panel was then immersed in a bath containing the sealing composition of Example B for 2 minutes at ambient temperature without agitation.

The panel was air dried at ambient conditions overnight before testing.

### EXAMPLE 6

Three aluminum 2024T3 bare substrate (Priority Metals, Orange County, CA) each measuring 7.62 cm × 25.40 cm × 0.081cm (3" x 10" x 0.032") were hand-wiped with methyl ethyl ketone (100%) and a disposable cloth and allowed to air dry prior to chemical cleaning. Each panel was immersed in a bath containing the cleaning composition of Example A for 4.5 minutes at ambient temperature with agitation. Each panel was then spray rinsed for 30 seconds with deionized water followed immediately by an immersion in a deionized water rinse for two minutes. After the immersion rinse, each panel was then immersed in a bath containing SOCOSURF TCS (a trivalent chromium-containing conversion composition commercially available from Socomore, prepared according to manufacturer's instructions) for 5 minutes at 40°C without agitation. Each panel was then spray rinsed for 2 minutes with deionized water followed immediately by an immersion in a deionized water rinse for two minutes. Each panel was then immersed in a bath containing the sealing composition of Example C for 2 minutes at ambient temperature without agitation.

The panel was air dried at ambient conditions overnight before testing.

### EXAMPLE 7 (comparative)

Three aluminum 2024T3 bare substrate (Priority Metals, Orange County, CA) each measuring 7.62 cm × 25.40 cm × 0.081cm (3" x 10" x 0.032") were hand-wiped with methyl ethyl ketone (100%) and a disposable cloth and allowed to air dry prior to chemical cleaning. Each panel was immersed in a bath containing the cleaning composition of Example A for 4.5 minutes at ambient temperature with agitation. Each panel was then spray rinsed for 30 seconds with deionized water followed immediately by an immersion in a deionized water rinse for two minutes. After the immersion rinse, each panel was then immersed in a bath containing SOCOSURF TCS (a trivalent chromium-containing conversion composition commercially available from Socomore, prepared according to manufacturer's instructions) for 5 minutes at 40°C without agitation. Each panel was then spray rinsed for 2 minutes with deionized water followed immediately by an immersion in a deionized water rinse for two minutes. The panel was air dried at ambient conditions overnight before testing.

### EXAMPLE 8 (comparative)

One aluminum 2024T3 bare substrate measuring 7.62 cm × 25.40 cm × 0.081cm (3" x 10" x 0.032") was hand- wiped with methyl ethyl ketone (100%) and a disposable cloth and allowed to air dry prior to chemical cleaning. The panel was immersed in a 5 gal. bath containing the cleaner solution of Ridonlene 298 (commercially available from Henkel AG & Co., prepared according to manufacturer's instructions at 1 part concentrate to 9 parts tap water, v/v) for 2 minutes at 55°C with mild agitation. The panel was then immersed in a tap water rinse for one minute at ambient temperature with mild agitation followed by a 10 second cascading tap water rinse. The panel was immersed in a 5 gal bath containing deoxidizing solution of Turco Deoxidizer 6/16 (commercially available from Henkel AG & Co., prepared according to manufacturer's instructions at 5 parts 6/16 to 10 parts nitric acid to 85 parts tap water, v/v) for 2.5 minutes at ambient temperature followed by a one minute immersion rinse in tap water at ambient temperature and mild agitation followed by a 10 second cascading rinse. The panel was then immersed in a bath containing Alodine 1200 (a hexavalent chromium-containing conversion composition commercially available from Henkel AG & Co., prepared according to manufacturer's instructions) for 2.5 minutes at ambient temperature and without agitation. After the immersion in conversion composition bath, the panel received an immersion rinse in deionized water for 1 minute at ambient temperature with mild agitation followed by a 10 second cascading deionized water rinse. The panel was air dried at ambient conditions overnight before testing.

### NEUTRAL SALT SPRAY TESTING

Panels were placed in a 7 day exposure in neutral salt spray cabinet operated according to ASTM Bl 17. Corrosion performance was evaluated according to MIL-C-5541, where any pits near the edges, scratches, metal defects or processing clamp holding areas were omitted/not counted. Data are reported in Table 3. For Examples 1-7, the number of reported pits is an average of the three panels. For Example 8, the number of pits reports is for a single panel.

**Table 3. Protocols and corrosion performance**

| Example | Cleaning composition | Time | Spray Rinse | lmms Rinse | Cascading Rinse | Deox | Time | Spray Rinse | lmms Rinse | Cascading Rinse | Conversion composition | Time | Spray Rinse | lmms Rinse | Cascading Rinse | Sealing compositi on | Time | #pits with visible corrosion tails following 168 Hrs NSS |
|---|---|---|---|---|---|---|---|---|---|---|---|---|---|---|---|---|---|---|
| l* | SOCOClEA N A3432 | 10m | 30 ec | 2m | | SOCOS URF A18S8-A1806 | Sm | 30sec | 2m | | SOCOSURF TCS | Sm | 2m | 2m | | --- | --- | 8 pits |
| 2* | SOCOClEA N A3432 | 10m | 30 sec | 2m | --- | SOCOS URF A18S8-A1806 | Sm | 30sec | 2m | --- | SOCOSURF TCS | Sm | 2m | 2m | --- | SOCOS URF PACS | Sm | 5 pits |
| 3* | SOCOClEA N A3432 | 10m | 30 sec | 2m | --- | SOCOS URF A18S8-A1806 | Sm | 30sec | 2m | --- | SOCOSURF TCS | Sm | 2m | 2m | --- | Example B | 2m | 3 pits |
| 4* | SOCOClEA N A3432 | 10m | 30 sec | 2m | --- | SOCOS URF A18S8-A1806 | Sm | 30sec | 2m | --- | SOCOSURF TCS | Sm | 2m | 2m | --- | Example C | 3m | 3 pits |
| 5 | Example A | 4.Sm | 30 sec | 2m | | | | | | | SOCOSURF TCS | Sm | 2m | 2m | | Example B | 2m | 3 pits |
| 6 | Example A | 4.Sm | 30 sec | 2m | --- | --- | --- | --- | --- | --- | SOCOSURF TCS | Sm | 2m | 2m | --- | Example C | lm | 0 pits |
| 7* | Example A | 4.Sm | 30 sec | 2m | --- | --- | --- | --- | --- | --- | SOCOSURF TCS | Sm | 2m | 2m | --- | --- | --- | 0 pits |
| 8* | Ridolene 298 | 2m | --- | lm | 10 sec | Turco Deoxidizer 6/16 | 2.Sm | --- | lm | 10 sec | Alodine 1200 | 2.Sm | --- | lm | 10 sec | --- | --- | 0 pits |

| | | | | | | | | | | | | | | | | | | |
|---|---|---|---|---|---|---|---|---|---|---|---|---|---|---|---|---|---|---|
| *comparative example | | | | | | | | | | | | | | | | | | |

**Table 4. Protocols and Corrosion Performance (Examples 9-17)**

| | | | | | | | | | | | | | | | |
|---|---|---|---|---|---|---|---|---|---|---|---|---|---|---|---|
| 9* | SocoClean A3432 | 10m | Rinses | 2m | SocoSurf A1806/1858 | 6m | Rinses | 2m | SurTec 650 | 5m | Rinse | 2m | Rinse | 2m | avg 7 pits/panel |
| 10* | SocoClean A3432 | 10m | Rinses | 2m | SocoSurf A1806/1858 | 6m | Rinses | 2m | SurTec 650 | 5m | Rinse | 2m | PACS Seal | 5m | avg 0.8 pits/panel |
| 11* | SocoClean A3432 | 10m | Rinses | 2m | SocoSurf A1806/1858 | 6m | Rinses | 2m | SurTec 650 | 5m | Rinse | 2m | Example B | 1m | avg 0.2 pits/panel |
| 12* | Example A | 1m | Rinses | 2m | SurTec 650 | 6m | Rinses | 2m | | | | | | | avg 0 pits/panel |
| 13* | Example A | 3m | Rinses | 2m | SurTec 650 | 6m | Rinses | 2m | | | | | | | avg 0 pits/panel |
| 14* | Example A | 6m | Rinses | 2m | SurTec 650 | 6m | Rinses | 2m | | | | | | | avg 0 pits/panel |
| 15* | SocoClean A3432 | 6m | Rinses | 2m | SmutGo | 1m | Rinses | 2m | SurTec 650 | 5m | Rinse | 2m | | | > 10 pits/panel |
| 16* | SocoClean A3432 | 6m | Rinses | 2m | SmutGo | 1m | Rinses | 2m | SurTec 650 | 5m | Rinse | 2m | PACS Seal | 5m | >5 pits/panel |
| 17* | SocoClean A3432 | 6m | Rinses | 2m | SmutGo | 1m | Rinses | 2m | SurTec 650 | 5m | Rinse | 2m | Example B | 1m | avg 0 pits/panel |

| | | | | | | | | | | | | | | | |
|---|---|---|---|---|---|---|---|---|---|---|---|---|---|---|---|
| *comparative example | | | | | | | | | | | | | | | |

### EXAMPLE 9 (comparative)

Three aluminum 2024T3 bare substrate (Priority Metals, Orange County, CA) each measuring 7.62 cm × 25.40 cm × 0.081cm (3" x 10" x 0.032") were hand-wiped with methyl ethyl ketone (100%) and a disposable cloth and allowed to air dry prior to chemical cleaning. Each panel was immersed in a bath containing SOCOCLEAN A3432 (a cleaning composition commercially available from Socomore, prepared according to manufacturer's instructions) for 10 minutes at 55°C with agitation. Each panel was then spray rinsed for 30 seconds with deionized water followed immediately by an immersion in a deionized water rinse for two minutes. After the immersion rinse, each panel was then immersed in a bath containing SOCOSURF Al858-Al806 (a deoxidizer commercially available from Socomore, prepared according to the manufacturer's instructions) for 6 minutes at 30°C with agitation. Each panel was then spray rinsed for 30 seconds with deionized water followed immediately by an immersion in a deionized water rinse for two minutes. After the immersion rinse, each panel was then immersed in a bath containing SURTEC 650 (a trivalent chromium-containing conversion composition commercially available from Surtec, prepared according to manufacturer's instructions) for 5 minutes at 27°C without agitation. Each panel was then immersion rinsed for 2 minutes with deionized water followed immediately by an immersion in a deionized water rinse for two minutes. The panel was air dried at ambient conditions overnight before testing.

### EXAMPLE 10 (comparative)

Three aluminum 2024T3 bare substrate (Priority Metals, Orange County, CA) each measuring 7.62 cm × 25.40 cm × 0.081cm (3" x 10" x 0.032") were hand-wiped with methyl ethyl ketone (100%) and a disposable cloth and allowed to air dry prior to chemical cleaning. Each panel was immersed in a bath containing SOCOCLEAN A3432 (a cleaning composition commercially available from Socomore, prepared according to manufacturer's instructions) for 10 minutes at 55°C with agitation. Each panel was then spray rinsed for 30 seconds with deionized water followed immediately by an immersion in a deionized water rinse for two minutes. After the immersion rinse, each panel was then immersed in a bath containing SOCOSURF Al858-Al806 (a deoxidizer commercially available from Socomore, prepared according to the manufacturer's instructions) for 6 minutes at 30°C with agitation. Each panel was then spray rinsed for 30 seconds with deionized water followed immediately by an immersion in a deionized water rinse for two minutes. After the immersion rinse, each panel was then immersed in a bath containing SURTEC 650 (a trivalent chromium-containing conversion composition commercially available from Surtec, prepared according to manufacturer's instructions) for 5 minutes at 30°C without agitation. Each panel was then immersion rinsed for 2 minutes with deionized water followed immediately by an immersion in a bath containing SOCOSURF PACS (a sealing composition containing H202, commercially available from Socomore, prepared according to manufacturer's instructions) for 5 minutes at 30°C with agitation. The panel was air dried at ambient conditions overnight before testing.

### EXAMPLE 11 (comparative)

Three aluminum 2024T3 bare substrate (Priority Metals, Orange County, CA) each measuring 7.62 cm × 25.40 cm × 0.081cm (3" x 10" x 0.032") were hand-wiped with methyl ethyl ketone (100%) and a disposable cloth and allowed to air dry prior to chemical cleaning. Each panel was immersed in a bath containing SOCOCLEAN A3432 (a cleaning composition commercially available from Socomore, prepared according to manufacturer's instructions) for 10 minutes at 55°C with agitation. Each panel was then spray rinsed for 30 seconds with deionized water followed immediately by an immersion in a deionized water rinse for two minutes. After the immersion rinse, each panel was then immersed in a bath containing SOCOSURF Al858-Al806 (a deoxidizer commercially available from Socomore, prepared according to the manufacturer's instructions) for 6 minutes at 30°C with agitation. Each panel was then spray rinsed for 30 seconds with deionized water followed immediately by an immersion in a deionized water rinse for two minutes. After the immersion rinse, each panel was then immersed in a bath containing SURTEC 650 (a trivalent chromium-containing conversion composition commercially available from Surtec, prepared according to manufacturer's instructions) for 5 minutes at 30°C without agitation. Each panel was then immersion rinsed for 2 minutes with deionized water followed immediately by an immersion in a bath containing a bath containing the sealing composition of Example B for 1 minute at ambient temperature without agitation. The panel was air dried at ambient conditions overnight before testing.

### EXAMPLE 12 (comparative)

Three aluminum 2024T3 bare substrate (Priority Metals, Orange County, CA) each measuring 7.62 cm × 25.40 cm × 0.081cm (3" x 10" x 0.032") were hand-wiped with methyl ethyl ketone (100%) and a disposable cloth and allowed to air dry prior to chemical cleaning. Each panel was immersed in a bath containing the cleaning composition of Example A for 1 minute at ambient temperature with agitation. Each panel was then spray rinsed for 30 seconds with deionized water followed immediately by an immersion in a deionized water rinse for two minutes. After the immersion rinse, each panel was then immersed in a bath containing SURTEC 650 (a trivalent chromium-containing conversion composition commercially available from Surtec, prepared according to manufacturer's instructions) for 6 minutes at 30°C without agitation. Each panel was then immersion rinsed for 2 minutes with deionized water followed immediately in a second immersion in a deionized water rinse for two minutes. The panel was air dried at ambient conditions overnight before testing.

### EXAMPLE 13 (comparative)

Three aluminum 2024T3 bare substrate (Priority Metals, Orange County, CA) each measuring 7.62 cm × 25.40 cm × 0.081cm (3" x 10" x 0.032") were hand-wiped with methyl ethyl ketone (100%) and a disposable cloth and allowed to air dry prior to chemical cleaning. Each panel was immersed in a bath containing the cleaning composition of Example A for 3 minutes at ambient temperature with agitation. Each panel was then spray rinsed for 30 seconds with deionized water followed immediately by an immersion in a deionized water rinse for two minutes. After the immersion rinse, each panel was then immersed in a bath containing SURTEC 650 (a trivalent chromium-containing conversion composition commercially available from Surtec, prepared according to manufacturer's instructions) for 6 minutes at 30°C without agitation. Each panel was then immersion rinsed for 2 minutes with deionized water followed immediately in a second immersion in a deionized water rinse for two minutes. The panel was air dried at ambient conditions overnight before testing.

### EXAMPLE 14 (comparative)

Three aluminum 2024T3 bare substrate (Priority Metals, Orange County, CA) each measuring 7.62 cm × 25.40 cm × 0.081cm (3" x 10" x 0.032") were hand-wiped with methyl ethyl ketone (100%) and a disposable cloth and allowed to air dry prior to chemical cleaning. Each panel was immersed in a bath containing the cleaning composition of Example A for 6 minutes at ambient temperature with agitation. Each panel was then spray rinsed for 30 seconds with deionized water followed immediately by an immersion in a deionized water rinse for two minutes. After the immersion rinse, each panel was then immersed in a bath containing SURTEC 650 (a trivalent chromium-containing conversion composition commercially available from Surtec, prepared according to manufacturer's instructions) for 6 minutes at 30°C without agitation. Each panel was then immersion rinsed for 2 minutes with deionized water followed immediately in a second immersion in a deionized water rinse for two minutes. The panel was air dried at ambient conditions overnight before testing.

### EXAMPLE 15 (comparative)

Three aluminum 2024T3 bare substrate (Priority Metals, Orange County, CA) each measuring 7.62 cm × 25.40 cm × 0.081cm (3" x 10" x 0.032") were hand-wiped with methyl ethyl ketone (100%) and a disposable cloth and allowed to air dry prior to chemical cleaning. Each panel was immersed in a bath containing SOCOCLEAN A3432 (a cleaning composition commercially available from Socomore, prepared according to manufacturer's instructions) for 10 minutes at 55°C with agitation. Each panel was then spray rinsed for 30 seconds with deionized water followed immediately by an immersion in a deionized water rinse for two minutes. After the immersion rinse, each panel was then immersed in a bath containing SMUTGO (a deoxidizer commercially available from Henkel, prepared according to the manufacturer's instructions) for 1 minute at 27°C with agitation. Each panel was then spray rinsed for 30 seconds with deionized water followed immediately by an immersion in a deionized water rinse for two minutes. After the immersion rinse, each panel was then immersed in a bath containing SURTEC 650 (a trivalent chromium-containing conversion composition commercially available from Surtec, prepared according to manufacturer's instructions) for 5 minutes at 27°C without agitation. Each panel was then immersion rinsed for 2 minutes with deionized water followed immediately by an immersion in a second deionized water rinse for two minutes. The panel was air dried at ambient conditions overnight before testing.

### EXAMPLE 16 (comparative)

Three aluminum 2024T3 bare substrate (Priority Metals, Orange County, CA) each measuring 7.62 cm × 25.40 cm × 0.081cm (3" x 10" x 0.032") were hand-wiped with methyl ethyl ketone (100%) and a disposable cloth and allowed to air dry prior to chemical cleaning. Each panel was immersed in a bath containing SOCOCLEAN A3432 (a cleaning composition commercially available from Socomore, prepared according to manufacturer's instructions) for 10 minutes at 55°C with agitation. Each panel was then spray rinsed for 30 seconds with deionized water followed immediately by an immersion in a deionized water rinse for two minutes. After the immersion rinse, each panel was then immersed in a bath containing SMUTGO (a deoxidizer commercially available from Henkel, prepared according to the manufacturer's instructions) for 1 minute at 27°C with agitation. Each panel was then spray rinsed for 30 seconds with deionized water followed immediately by an immersion in a deionized water rinse for two minutes. After the immersion rinse, each panel was then immersed in a bath containing SURTEC 650 (a trivalent chromium-containing conversion composition commercially available from Surtec, prepared according to manufacturer's instructions) for 5 minutes at 30°C without agitation. Each panel was then immersion rinsed for 2 minutes with deionized water followed immediately by an immersion in a bath containing SOCOSURF PACS (a sealing composition containing H202, commercially available from Socomore, prepared according to manufacturer's instructions) for 5 minutes at 30°C with agitation. The panel was air dried at ambient conditions overnight before testing.

### EXAMPLE 17 (comparative)

Three aluminum 2024T3 bare substrate (Priority Metals, Orange County, CA) each measuring 7.62 cm × 25.40 cm × 0.081cm (3" x 10" x 0.032") were hand-wiped with methyl ethyl ketone (100%) and a disposable cloth and allowed to air dry prior to chemical cleaning. Each panel was immersed in a bath containing SOCOCLEAN A3432 (a cleaning composition commercially available from Socomore, prepared according to manufacturer's instructions) for 10 minutes at 55°C with agitation. Each panel was then spray rinsed for 30 seconds with deionized water followed immediately by an immersion in a deionized water rinse for two minutes. After the immersion rinse, each panel was then immersed in a bath containing SMUTGO (a deoxidizer commercially available from Henkel, prepared according to the manufacturer's instructions) for 1 minute at 27°C with agitation. Each panel was then spray rinsed for 30 seconds with deionized water followed immediately by an immersion in a deionized water rinse for two minutes. After the immersion rinse, each panel was then immersed in a bath containing SURTEC 650 (a trivalent chromium-containing conversion composition commercially available from Surtec, prepared according to manufacturer's instructions) for 5 minutes at 30°C without agitation. Each panel was then immersion rinsed for 2 minutes with deionized water followed immediately by an immersion in a bath containing the sealing composition of Example B for 1 minute1 at ambient temperature without agitation. The panel was air dried at ambient conditions overnight before testing.

## Claims

1. A system for treating a metal substrate comprising:
a cleaning composition, wherein the cleaning composition is alkaline, wherein the cleaning composition further comprises a corrosion inhibitor comprising a metal cation and/or an azole; and
a conversion composition comprising a trivalent chromium cation in an amount of 0.001 g/L to 20 g/L, and at least one coinhibitor comprising a Group IVB metal cation; and
a sealing composition comprising a lithium cation in an amount of 5 ppm to 5500 ppm (as metal cation) based on total weight of the sealing composition, wherein
the sealing composition has a pH of 9.5 to 12.5.

2. The system of Claim 1, wherein the conversion composition further comprises an anion suitable for forming a salt with the trivalent chromium cation.

3. The system of any of the preceding Claims, wherein
- the sealing composition further comprises an azole, an indicator compound, or combinations thereof.

4. The system of Claim 1, further comprising a carbonate, a hydroxide, or combinations thereof.

5. The system of any of the preceding Claims, wherein
- the cleaning composition comprises a hydroxide source and/or a phosphate source.

6. The system of any of the preceding Claims, wherein the cleaning composition has a pH of 7 to 13.

7. The system of any of the preceding Claims, wherein the cleaning composition comprises a deoxidizer.

8. The system of any of the preceding Claims, wherein the system further comprises a chemical deoxidizer.

9. A method of treating a substrate comprising:
contacting at least a portion the substrate surface with a conversion composition comprising a trivalent chromium cation in an amount of 0.001 g/L to 20 g/L, and at least one coinhibitor comprising a Group IVB metal cation; and
contacting at least a portion of the substrate surface with a sealing composition comprising a lithium cation in an amount of 5 ppm to 5500 ppm (as metal cation) based on total weight of the sealing composition, wherein the sealing composition has a pH of 9.5 to 12.5, further comprising contacting at least a portion of a surface of the substrate with a cleaning composition; wherein the contacting with the cleaning composition occurs prior to the contacting with the conversion composition, wherein the cleaning composition is alkaline, wherein the cleaning composition further comprises a corrosion inhibitor comprising a metal cation and/or an azole.

10. The method of Claim 9, wherein the sealing composition has a pH of 9.5 to 12.5.

11. A substrate obtainable with the system of any of Claims 1- 8 or by the method of Claim 9.

12. The substrate of Claim 11, wherein the substrate contacted with the sealing composition has at least a 40% reduction in the number of pits on the substrate surface compared to a substrate not treated with the sealing composition following 7 day exposure in neutral salt spray cabinet operated according to ASTM B117.

## Patentansprüche

1. Ein System zur Behandlung eines Metallsubstrats, enthaltend:
eine Reinigungszusammensetzung, wobei die
Reinigungszusammensetzung alkalisch ist, wobei die Reinigungszusammensetzung ferner einen Korrosionsinhibitor umfassend ein Metallkation und/oder ein Azol enthält, und
eine Konversionszusammensetzung enthaltend ein dreiwertiges Chromkation in einer Menge von 0,001 g/L bis 20 g/L und mindestens einen Co-Inhibitor, der ein Metallkation der Gruppe IVB umfasst, und
eine Versiegelungszusammensetzung enthaltend ein Lithiumkation in einer Menge von 5 ppm bis 5500 ppm (als Metallkation), bezogen auf das Gesamtgewicht der Versiegelungszusammensetzung, wobei die Versiegelungszusammensetzung einen pH-Wert von 9,5 bis 12,5 aufweist.

2. Das System nach Anspruch 1, wobei die Konversionszusammensetzung ferner ein Anion enthält, das zur Bildung eines Salzes mit dem dreiwertigen Chromkation geeignet ist.

3. Das System nach einem der vorstehenden Ansprüche, wobei
- die Versiegelungszusammensetzung ferner ein Azol, eine Indikatorverbindung oder Kombinationen davon enthält.

4. Das System nach Anspruch 1, das ferner ein Carbonat, ein Hydroxid oder Kombinationen davon enthält.

5. Das System nach einem der vorstehenden Ansprüche, wobei
- die Reinigungszusammensetzung eine Hydroxidquelle und/oder eine Phosphatquelle enthält.

6. Das System nach einem der vorstehenden Ansprüche, wobei die Reinigungszusammensetzung einen pH-Wert von 7 bis 13 aufweist.

7. Das System nach einem der vorstehenden Ansprüche, wobei die Reinigungszusammensetzung ein Desoxidationsmittel enthält.

8. Das System nach einem der vorstehenden Ansprüche, wobei das System ferner ein Desoxidationsmittel enthält.

9. Ein Verfahren zur Behandlung eines Substrats, umfassend:
Inkontaktbringen mindestens eines Teils der Substratoberfläche mit einer Konversionszusammensetzung enthaltend ein dreiwertiges Chromkation in einer Menge von 0,001 g/L bis 20 g/L und mindestens einen Co-Inhibitor, der ein Metallkation der Gruppe IVB umfasst, und
Inkontaktbringen mindestens eines Teils der Substratoberfläche mit einer Versiegelungszusammensetzung enthaltend ein Lithiumkation in einer Menge von 5 ppm bis 5500 ppm (als Metallkation), bezogen auf das Gesamtgewicht der Versiegelungszusammensetzung, wobei die Versiegelungszusammensetzung einen pH-Wert von 9,5 bis 12,5 aufweist, wobei das Verfahren ferner das Inkontaktbringen mindestens eines Teils einer Oberfläche des Substrats mit einer Reinigungszusammensetzung umfasst, wobei das Inkontaktbringen mit der Reinigungszusammensetzung vor dem Inkontaktbringen mit der Konversionszusammensetzung erfolgt,
wobei die Reinigungszusammensetzung alkalisch ist und wobei die Reinigungszusammensetzung ferner einen Korrosionsinhibitor enthält, der ein Metallkation und/oder ein Azol umfasst.

10. Das Verfahren nach Anspruch 9, wobei die
Versiegelungszusammensetzung einen pH-Wert von 9,5 bis 12,5 aufweist.

11. Ein Substrat, das mit dem System gemäß einem der Ansprüche 1 bis 8 oder durch das Verfahren gemäß Anspruch 9 erhalten wird.

12. Das Substrat nach Anspruch 11, wobei das mit der Versiegelungszusammensetzung in Kontakt gebrachte Substrat im Vergleich zu einem Substrat, das nicht mit der Versiegelungszusammensetzung behandelt wurde, eine Verringerung der Anzahl der Korrosionspunkte auf der Substratoberfläche um mindestens 40 % nach 7-tägigem Aussetzen in einer mit einer neutralen Salzlösung gemäß ASTM B117 betriebenen Sprühkammer aufweist.

## Revendications

1. Système destiné au traitement d'un substrat métallique, comprenant :
une composition de nettoyage, la composition de nettoyage étant alcaline, la composition de nettoyage comprenant en outre un inhibiteur de corrosion comprenant un cation métallique et/ou un azole ; et
une composition de conversion comprenant un cation chrome trivalent en une quantité de 0,001 g/l à 20 g/l, et au moins un co-inhibiteur comprenant un cation métallique du groupe IVB ; et
une composition d'étanchéité comprenant un cation lithium en une quantité de 5 ppm à 5 500 ppm (en tant que cation métallique) par rapport au poids total de la composition d'étanchéité, la composition d'étanchéité ayant un pH de 9,5 à 12,5.

2. Système selon la revendication 1, dans lequel la composition de conversion comprend en outre un anion apte à former un sel avec le cation chrome trivalent.

3. Système selon l'une quelconque des revendications précédentes, dans lequel
- la composition d'étanchéité comprend en outre un azole, un composé indicateur, ou des associations de tels composés.

4. Système selon la revendication 1, comprenant en outre un carbonate, un hydroxyde ou des associations de ceux-ci.

5. Système selon l'une quelconque des revendications précédentes, dans lequel
- la composition de nettoyage comprend une source d'hydroxyde et/ou une source de phosphate.

6. Système selon l'une quelconque des revendications précédentes, dans lequel la composition de nettoyage a un pH de 7 à 13.

7. Système selon l'une quelconque des revendications précédentes, dans lequel la composition de nettoyage comprend un désoxydant.

8. Système selon l'une quelconque des revendications précédentes, dans lequel le système comprend en outre un désoxydant chimique.

9. Procédé de traitement d'un substrat, comprenant :
la mise en contact d'au moins une partie de la surface du substrat avec une composition de conversion comprenant un cation chrome trivalent en une quantité de 0,001 g/l à 20 g/l, et au moins un co-inhibiteur comprenant un cation métallique du groupe IVB ; et
la mise en contact d'au moins une partie de la surface du substrat avec une composition d'étanchéité comprenant un cation lithium en une quantité de 5 ppm à 5 500 ppm (en tant que cation métallique) par rapport au poids total de la composition d'étanchéité, où la composition d'étanchéité a un pH de 9,5 à 12,5, comprenant en outre la mise en contact d'au moins une partie d'une surface du substrat avec une composition de nettoyage ; où la mise en contact avec la composition de nettoyage a lieu avant la mise en contact avec la composition de conversion, où la composition de nettoyage est alcaline, où la composition de nettoyage comprend en outre un inhibiteur de corrosion comprenant un cation métallique et/ou un azole.

10. Procédé selon la revendication 9, dans lequel la composition d'étanchéité a un pH de 9,5 à 12,5.

11. Substrat pouvant être obtenu avec le système selon l'une quelconque des revendications 1-8 ou par le procédé selon la revendication 9.

12. Substrat selon la revendication 11, dans lequel le substrat mis en contact avec la composition d'étanchéité présente au moins une réduction de 40 % du nombre de piqûres à la surface du substrat par comparaison avec un substrat non traité par la composition d'étanchéité, après exposition pendant 7 jours dans une chambre à brouillard salin neutre utilisée conformément à ASTM B117.
